# EUROPEAN PATENT APPLICATION

(11) **EP 2 768 231 A1**
(43) Date of publication of application: **20.08.2014**
(21) Application number: 12840042.1
(22) Date of filing: 12.10.2012
(51) Int. Cl.: H04N 21/43

(54) **METHOD FOR DISPLAYING CONTENTS, METHOD FOR SYNCHRONIZING CONTENTS, AND METHOD AND DEVICE FOR DISPLAYING BROADCAST CONTENTS**

(30) Priority: 13.10.2011 US 201161546618 P; 28.10.2011 US 201161552645 P; 22.11.2011 US 201161562699 P
(71) Applicant: Samsung Electronics Co., Ltd., Suwon-si, Gyeonggi-do 443-742 (KR); University-Industry Cooperation Group of Kyung Hee University, Gyeonggi-do 446-701 (KR)
(72) Inventor: JANG, Yong-seok, Hwaseong-si Gyeonggi-do 487-851 (KR); KIM, Kyu-heon, Seoul 135-100 (KR); KIM, Byung-cheol, Pohang-si Gyeongsangbuk-do 791-940 (KR); PARK, Jung-woog, Suwon-si Gyeonggi-do (KR); PARK, Hong-seok, Anyang-si Gyeonggi-do 431-050 (KR); KIM, Hee-jean, Yongin-si Gyeonggi-do 449-905 (KR); PARK, Kyung-mo, Seoul 135-969 (KR); PARK, Gwang-hoon, Seongnam-si Gyeonggi-do 463-831 (KR); SUH, Duk-young, Seongnam-si Gyeonggi-do 463-020 (KR); RHYU, Sung-ryeul, Yongin-si Gyeonggi-do 448-710 (KR); LEE, Dae-jong, Hwaseong-si Gyeonggi-do 445-738 (KR); LEE, Jae-jun, Suwon-si Gyeonggi-do 443-769 (KR); HWANG, Sung-oh, Yongin-si Gyeonggi-do 448-162 (KR)
(74) Representative: Brandon, Paul Laurence
(86) International application number: PCT/KR2012/008343
(87) International publication number: WO 2013/055164

(57) **Abstract**

A method of displaying contents is provided. The method includes: receiving initial scene configuration information of a content written in a markup language from an external device; parsing and structuralizing the initial scene configuration information; rendering the content according to the structuralized initial scene configuration information; receiving additional scene configuration information of the content from the external device; updating the structuralized initial scene configuration information based on the received additional scene configuration information; and rendering the content according to the updated initial scene configuration information.

## Description

### CROSS-REFERENCE TO RELATED APPLICATION(S)

This application claims priority under 35 U.S.C. § 119 from Korean Patent Application No. 10-2012-0113753, filed on October 12, 2012, in the Korean Intellectual Property Office, the disclosure of which is incorporated herein by reference in its entirety.

### BACKGROUND

### 1. Field

The present general inventive concept generally relates to providing a method of displaying contents, and more particularly, to providing a content displaying method of updating scene configuration information in real time to display contents, a method of synchronizing contents received from various sources, a method of displaying broadcast contents, and a display device for displaying contents by using the method.

### 2. Description of the Related Art

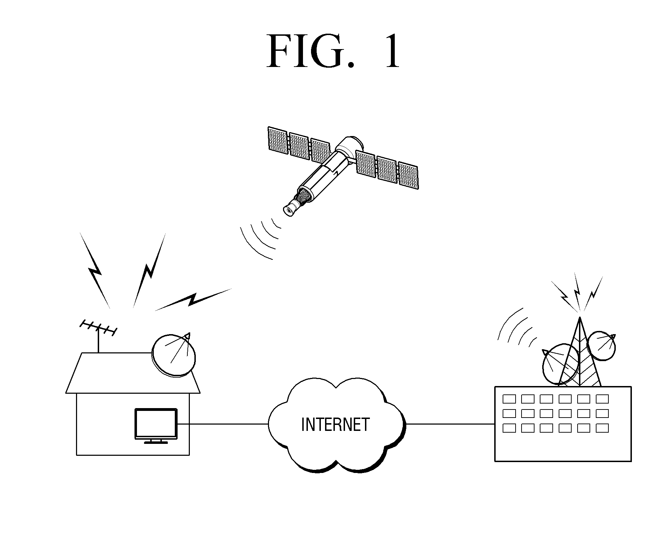

FIG. 1 is a view illustrating a broadcast-communication network in the broadcast-communication fusion age.

With the arrival of the broadcast-communication age due to digital, a consumption environment of images, music, and other entertainment contents has extended through broadcast-communication media such as an Internet protocol television (IPTV), a smart TV, etc. As shown in FIG. 1, a broadcast signal of a broadcasting station may be transmitted to a home through a satellite signal or through a public broadcast signal or the Internet. An environment where a service of one kind of content is unidirectionally provided by using consumption media has been developed into an environment where various types of information are simultaneously consumed, due to the development of terminals and communication technologies. Also, generalization of content consumption for acquiring only information desired by consumers takes the lead in a trend.

Scene configuration information refers space information about areas of a screen occupied by respective elements and time information about at what time contents are consumed when various types of contents such as video, audio, etc. are consumed. Also, the scene configuration information is information that is expressed in a markup language format to describe correlation between the elements.

The scene configuration information mainly uses an extensible markup language (XML) to express time information of various types of multimedia. The XML having the scene configuration information has information about correlations between logical structures of elements constituting a multimedia. Also, a terminal parses an XML file to define an object and an attribute of an element including the scene configuration information and generate a document object model (DOM) that defines an interface for accessing the object and the attribute of the element.

Technologies for the XML and the DOM are standards for constituting a webpage and thus are used to generate a new XML file and reconstitute the DOM whenever some elements of the webpage are to be changed. However, elements included in the webpage are mainly texts and images, and although all of the elements are reconstituted, this is not a burden to a terminal.

However, since the scene configuration information includes various types of multimedia elements such as video, audio, app, etc. differently from the webpage, reconfiguring all of the multimedia elements when changing some of the multimedia elements lays a large burden on the terminal.

If an existing scene configuration technology is used, a service provider remakes and provides a file including new scene configuration information, and a terminal that is provided with a service deletes an initially configured scene and reconfigures a new scene when the initially configured scene is reconfigured. When some of a plurality of elements constituting a scene is reconfigured, newly generating and parsing elements that do not need to be reconfigured results in inefficiently using limited resources of the terminal.

Therefore, there is a need for a method of updating only reconfigured elements to efficiently configure a scene if some of the plurality of elements constituting the initially configured scene are reconfigured.

A hybrid technology of broadcast-communication fusion has been developed into a technology that allows general viewers to view a broadcast in real time by using an existing broadcast network and simultaneously provides a communication network with various types of services, such as an IP VOD, advertisement, a 3-dimensional (3D) image service, multi-view, etc., through bidirectional communications of an additional image, an application, etc.

Among these, the multi-view service allows a viewer to view real-time contents provided through the existing broadcast network and contents provided through the Internet on one screen through a broadcast-communication service in order to simultaneously provide multi-views and various types of information to the viewer. Common time information is required to synchronize and simultaneously consume media that are transmitted through different transmission methods, in order to provide the multi-view service. However, since standardized time information of media transmitted through a heterogeneous network have different formats and objects, synchronization may not be provided.

An MPEG-2 Transport Stream (TS) that is received through the existing broadcast network inserts a corresponding decoding time stamp (DTS)/presentation time stamp (PTS) into each frame by using a clock of a broadcasting station system to use the DTS/PTS as time information. A terminal receives a clock value of a broadcasting company to synchronize video and audio. Also, one of media that is received through a communication network and uses a Dynamic Adaptation Streaming over HTTP (DASH) technology inserts time information into an index value of each frame to express the index value as time information. Therefore, time information formats of two media are different from each other and thus may not synchronize with each other through independent technologies.

As a result, there is a need for a method of synchronizing media transmitted through a heterogeneous network in a hybrid service environment for transmitting various types of correlated contents including multiview contents described above.

A hybrid broadcast provides a traditional method, by which a user consumes an existing push-based streaming service based on time, and a user event-based service that provides, consumes, and stops new contents according to a request of the user.

Therefore, a terminal that receives the hybrid broadcast does not simply show video/audio contents to the user with a flow of time but determines a schedule of content consumption according to a request of the user, and receives and consumes contents corresponding to each scene based on the schedule.

In other words, if various types of contents are transmitted through a heterogeneous network in which broadcast and communication are fused, a broadcast network transmits contents with a flow of time, and a communication network transmits contents according to a request of a user. Therefore, various types of service methods may be suggested to a service provider and a terminal consumer.

Similarly to binary format scenes (BIFS) and LASeR of MPEG-4 systems, composition information (CI) of an MMT package describes spatio-temporal information of elements included in scene configuration information and correlations between the elements. Existing scene configuration information (for example, LASeR, BIFS) indicates time information of elements based on a timeline that is referred to as a scene time based on a broadcast environment. However, it may be difficult to process an event according to a request of a user due to an existence of an existing timeline in order to satisfy a service scenario according to a request of the user included in a use case of an MMT.

Also, a content producer of the existing scene configuration information pre-determines service schedules of all events to determine sending times in order to provide services. Therefore, if new contents are added when providing a service, it is difficult to correlate a timeline of the new contents with a timeline that is previously serviced. Therefore, if a plurality of media are individually consumed according to a request of the user, there is a limit in constituting a request of the user for each of the media as one timeline.

Therefore, there is a need for a method of appropriately arranging and displaying a plurality of contents if various types of contents displaying events occur regardless of a timeline of a broadcasting station.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a technology for reconfiguring only an element that is to be reconfigured, without reconfiguring the other elements when reconfiguring some of elements of scene configuration information, and more particularly, provides a method of transmitting only information about only an element that is to be reconfigured based on an initially configured scene to update scene configuration information that is to be reconfigured in an existing configured scene.

The exemplary embodiments also provide a synchronization method of simultaneously playing contents, which are received by using different physical transmission methods, on a screen for a plurality of video multimedia services and a plurality of audio multimedia services including multi-views.

In other words, the exemplary embodiments also provide a method of transmitting an MPEG-2 TS of a broadcast network or media of a communication network including reference information for calculating time information of contents transmitted through the communication network, and more particularly, provide a technology for adding particular data information to program map table (PMT) information of an MPEG-2 TS packet transmitted through a broadcast network or adding the particular data information to metadata of media transmitted through a communication network in order to provide time information for synchronizing media transmitted through the broadcast network and the communication network.

The exemplary embodiments also provide a technology for appropriately arranging and displaying a plurality of contents if various types of contents displaying event occur regardless of a timeline of a broadcasting station.

According to an aspect of the exemplary embodiments, there is provided a method of displaying contents. The method may include: receiving initial scene configuration information of a content written in a markup language from an external device; parsing and structuralizing the initial scene configuration information; rendering the content according to the structuralized initial scene configuration information; receiving additional scene configuration information of the content from the external device; updating the structuralized initial scene configuration information based on the received additional scene configuration information; and rendering the content according to the updated initial scene configuration information.

The updating of the structuralized initial scene configuration information may include: adding an additional configuration corresponding to the received additional scene configuration information to the structuralized initial scene configuration information, replacing a replaceable configuration corresponding to the received additional scene configuration information with some configurations of the structuralized initial scene configuration information, or deleing some configurations of the structuralized initial scene configuration information according to the received additional scene configuration information.

The markup language may be an extensible markup language (XML), and the structuralizing of the initial scene configuration information may include parsing the initial scene configuration information to constitute a document object model (DOM) tree.

The updating of the structuralized initial scene configuration information may include: adding a tree node corresponding to the received additional scene configuration information to the DOM tree, replacing a replaceable tree node corresponding to the received additional scene configuration information with some nodes of the DOM tree, or deleing some nodes of the DOM tree according to the received additional scene configuration information.

The updating of the structuralized initial scene configuration information may be performed whenever the additional scene configuration information is received.

According to another aspect of the exemplary embodiments, there is provided a method of synchronizing contents. The method may include: receiving a transmission stream through a broadcast network; parsing the received transmission stream; when it is determined that a first content included in the transmission stream is a multiview content according to the parsing result, receiving a second content corresponding to the first content through a communication network; and simultaneously outputting the first content included in the transmission stream and the received second content.

The parsing of the transmission stream may include parsing information comprised in a program map table (PMT) to determine whether to provide the multiview content, wherein the PMT includes at least one of a frame number, a multiview content presentation time stamp (PTS), a PTS starting value, and a society of motion picture and television engineers (SMPTE) Timecode starting value.

The receiving of the second content may include: receiving a media presentation description (MPD) and an initialization segment; and receiving a segment of the second content corresponding to a frame number of the first content in which a PTS value of the first content is equal to a PTS value of the multiview content.

The receiving of the second content may include: receiving an MPD and an initialization segment; and calculating a current frame number of the first content based on a difference between a PTS value of a current frame of the first content and a PTS starting value and receiving a segment of the second content corresponding to the current frame number of the first content.

The receiving of the second content may include: receiving an MPD and an initialization segment; and calculating time information of the first content based on a difference between an SMPTE Timecode value of the first content and an SMPTE Timecode starting value and receiving a segment of the second content corresponding to the time information of the first content.

The receiving of the second content may include: receiving the second content corresponding to a frame positioned behind the preset number of frames more than the current frame of the first content in consideration of a delay of the communication network.

According to another aspect of the exemplary embodiments, there is provided a method of displaying broadcast contents. The method may include: transmitting scene configuration information of a first content written in a markup language through a first sever; transmitting and rendering the first content based on the scene configuration information of the transmitted first content; and when a second content viewing event occurs, transmitting and rendering a second content through a second server.

When the second content viewing event occurs, rendering of the first content may stop, and when an event for ending the rendering of the second content occurs, the first content may be rendered from a time when the rendering of the first content stops.

When the second content viewing event occurs, the second server may synchronize the second content with the first content, and transmit and render the synchronized contents.

According to another aspect of the exemplary embodiments, there is provided a display device including: a receiver configured to receive initial scene configuration information of a content written in a markup language and the content from an external device; an output unit configured to output the received content; and a controller configured to parse and structuralize the initial scene configuration information, and render and output the content according to the structuralized initial scene configuration information. When the receiver receives additional scene configuration information of the content from the external device, the controller may update the structuralized initial scene configuration information based on the received additional scene configuration information, and render and output the content according to the updated initial scene configuration information.

The structuralized initial scene configuration information may be updated by adding an additional configuration corresponding to the received additional scene configuration information to the structuralized initial scene configuration information, replacing a replaceable configuration corresponding to the received additional scene configuration information with some configurations of the structuralized initial scene configuration information, or deleting some configurations of the structuralized initial scene configuration information according to the received additional scene configuration information.

The markup language may be an XML, and the initial scene configuration information may be parsed to constitute a DOM tree.

The structuralized initial scene configuration information may be updated by adding a tree node corresponding to the received additional scene configuration information to the DOM tree, replacing a replaceable tree node corresponding to the received additional scene configuration information with some nodes of the DOM tree, or deleting some nodes of the DOM tree according to the received additional scene configuration information.

According to another aspect of the exemplary embodiments, there is provided a recording medium that records a program performing one of the methods.

According to various exemplary embodiments of the present general inventive concept, there is provided a technology of a method by which, when some elements of an initially configured scene is to be changed, scene configuration information of all elements is not be newly generated, but only configuration information about an element that is changed is transmitted to update only an element that is changed for a multimedia service that is currently consumed.

A technology for reconfiguring only an element to be changed without reconfiguring another element when some elements of scene configuration information are changed may be used in various types of multimedia services.

A technology for reconfiguring only some elements of scene configuration information may be expected to suggest a technology standard using a scene configuration technology and a directivity of developing a multimedia service technology through a webpage.

The present general inventive concept provides a method of adding new information to a PMT of an MPEG2-TS provided through a broadcast network to provide synchronization time information that may be commonly used by media transmitted through a heterogeneous network or simultaneously playing media contents having different types of time information through a method of using an SMPTE Timecode.

A method of synchronizing the media transmitted through the heterogeneous network may be used as a foundation technology for activating a hybrid service using a broadcast network and a communication network.

Also, a synchronization method that will be developed according to the present general inventive concept is based on an MPEG-2TS and a DASH technology transmitted through a communication network but may suggest two technology standards and a directivity of developing various types of hybrid transmission technologies.

According to various exemplary embodiments of the present general inventive concept, there is provided a technology for appropriately arranging and display a plurality of contents when various types of content displaying events occur regardless of a timeline of a broadcasting state.

### BRIEF DESCRIPTION OF THE DRAWINGS

The above and/or other aspects will be more apparent by describing certain exemplary embodiments with reference to the accompanying drawings, in which:
FIG. 1 is a view illustrating a broadcast communication network in a broadcast-communication fusion age;
FIG. 2 is a flowchart illustrating a method of displaying contents according to an exemplary embodiment of the present general inventive concept;
FIG. 3 is a flowchart illustrating the method of FIG. 2 in more detail;
FIG. 4 is a view illustrating an extensible markup language (XML) file that is written by using existing scene configuration information;
FIG. 5 is a view illustrating an XML file that is written by adding other elements to existing scene configuration information, according to an exemplary embodiment of the present general inventive concept;
FIG. 6 is a view illustrating elements that are to be added to existing scene configuration information and that are individually generated as XML files, according to an exemplary embodiment of the present general inventive concept;
FIG. 7 is a view illustrating an operation of generating initial scene configuration information of FIG. 4, transmitting the initial scene configuration information to a terminal, and parsing the initial scene configuration information to generate a document object model (DOM);
FIG. 8 is a view illustrating an operation of generating an XML file to which an image is added, transmitting the XML file to a terminal, and parsing the XML file to newly generate a DOM;
FIG. 9 is a view illustrating a method of separately generating and transmitting only an element that is to be reconfigured in order to update only an element that is to be added without deleting a previously generated DOM;
FIG. 10 is a view illustrating a synchronization structure between data of an MPEG-2 Transport Stream (TS) system that is currently used in a terrestrial digital broadcast;
FIG. 11 is a view illustrating a process of classifying data types through a TS demultiplexer;
FIG. 12 is a view illustrating a process of a Dynamic Adaptation Streaming over Hypertext Transfer Protocol (HTTP) DASH technology as an example of transmitting an additional image through a communication network;
FIG. 13 is a flowchart illustrating a method of synchronizing contents, according to an exemplary embodiment of the present general inventive concept;
FIG. 14 is a flowchart illustrating a method of synchronizing contents, according to another exemplary embodiment of the present general inventive concept;
FIG. 15 is a flowchart illustrating a method of adding Multiview_Descriptor providing Frame_num to a PMT to synchronize multiview media contents, according to an exemplary embodiment of the present general inventive concept;
FIG. 16 is a flowchart illustrating a method of adding Multiview_Descriptor providing Init-PTS to a PMT to synchronize multiview media contents, according to an exemplary embodiment of the present general inventive concept;
FIG. 17 is a flowchart illustrating a method of performing synchronization by using SMPTE Timecode of media of a broadcast network and a communication network, according to an exemplary embodiment of the present general inventive concept;
FIG. 18 is a flowchart illustrating a method of synchronizing multiview media contents that request a future scene in consideration of a network delay, according to an exemplary embodiment of the present general inventive concept;
FIG. 19 is a view illustrating a program code in which Multiview_Descriptor providing Frame_num is added to a PMT of FIG. 15;
FIG. 20 is a view illustrating a program code in which Multiview_Descriptor providing Init_PTS is added to a PMT of FIG. 16;
FIG. 21 is a flowchart illustrating a process of a terminal that receives contents between a server and a broadcasting station to synchronize the contents, according to various exemplary embodiments of the present general inventive concept;
FIG. 22 is a view illustrating an on-demand breaking news scenario as an example of a method of displaying event-based broadcast contents;
FIG. 23 is a view illustrating a push-type breaking news scenario according to another exemplary embodiment of the present general inventive concept;
FIG. 24 is a view illustrating a timeline of a breaking news scenario;
FIG. 25 is a view illustrating an on-demand relay scenario as an example of a method of displaying event-based broadcast contents;
FIG. 26 is a view illustrating a push-type relay scenario according to another exemplary embodiment of the present general inventive concept;
FIG. 27 is a view illustrating a timeline of a relay scenario;
FIG. 28 is a view illustrating an on-demand multiview scenario as an example of a method of displaying event-based broadcast contents;
FIG. 29 is a view illustrating a push-type multiview scenario according to another exemplary embodiment of the present general inventive concept;
FIG. 30 is a view illustrating a timeline of a multiview scenario;
FIG. 31 is a view illustrating an individual media time in a multiview scenario according to an exemplary embodiment of the present general inventive concept;
FIGS. 32 and 33 are flowcharts illustrating methods of displaying broadcast contents according to various exemplary embodiments of the present general inventive concept;
FIG. 34 is a view illustrating additional scene configuration information that is received when an event of a breaking news scenario occurs, according to an exemplary embodiment of the present general inventive concept;
FIG. 35 is a view illustrating scene configuration information including information about processing of an event of a relay scenario, according to an exemplary embodiment of the present general inventive concept;
FIG. 36 is a view illustrating scene configuration information including information about processing of an event of a multiview scenario, according to an exemplary embodiment of the present general inventive concept; and
FIG. 37 is a block diagram illustrating a structure of a display device according to various exemplary embodiments of the present general inventive concept.

### DETAILED DESCRIPTION OF THE EXEMPLARY EMBODIMENTS

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail. The terms that will be described later are terms that are defined in consideration of functions in the present general inventive concept and may vary according to intentions or conventions of users or operators, etc. Therefore, the definition should be based on contents that are described throughout the present general inventive concept.

Displaying of contents through updating of scene configuration information

Prior to the description of exemplary embodiments of the present general inventive concept, several preconditions for realizing the present general inventive concept will now be described.

Scene configuration information described herein refers to information for describing spatio-temporal position information of multimedia contents and correlations between elements and is described in an extensible markup language (XML).

The scene configuration information described herein is divided into initial scene configuration information that is initially written and currently provides a service and additional scene configuration information that is about some elements to be reconfigured in the initial scene configuration information.

A terminal described herein may parse an XML file and constitute a document object model (DOM). The terminal may parse an XML file including additional scene configuration information and update a DOM generated as initial scene configuration information in real time.

Hereinafter, a method of separately generating only a part to be reconfigured as additional scene configuration information if the part of an initial scene is to be reconfigured, a method of transmitting the generated additional scene configuration information to a terminal, and a method of parsing the transmitted additional scene configuration information to update a scene configuration of a terminal including the initial scene configuration information will be described.

Also, in the present general inventive concept, a service that is provided through scene configuration information using XML and DOM technologies will be described. However, the present general inventive concept is not limited to the service that is provided through the scene configuration information and may be applied to all fields in which various types of multimedia are complexly configured to provide a service.

Hereinafter, exemplary embodiments of the present general inventive concept will be described in detail with reference to the attached drawings. Like reference numerals in the drawings denote like elements. Also, well-known functions or constructions are not described in detail since they would obscure the exemplary embodiments with unnecessary detail.

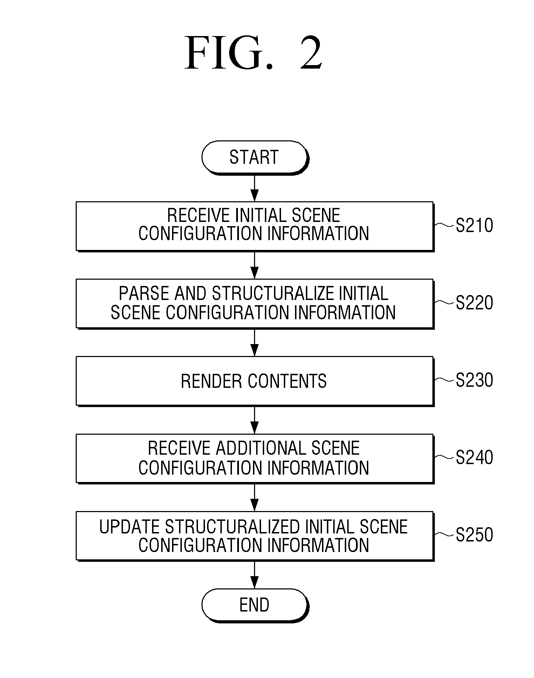

FIG. 2 is a flowchart illustrating a method of displaying contents according to an exemplary embodiment of the present general inventive concept.

Referring to FIG. 2, in operation S210, initial scene configuration information of a content that is written in a markup language is received from an external device. Here, the markup language may be an XML.

In operation S220, the initial scene configuration information is parsed to be structuralized. The initial scene configuration information may be parsed to constitute a DOM tree in order to perform operation S220.

In operation S230, the content is rendered according to the structuralized initial scene configuration information. In operation S240, additional scene configuration information is received from the external device if the initial scene configuration information is reconfigured. For example, the initial scene configuration information is about a scene configuration in which a multimedia service provider is formed of video and audio. If an image element is additionally inserted into the initial scene configuration information, additional scene configuration information including this content is received.

In operation S250, the structuralized initial scene configuration information is updated based on the received additional scene configuration information. Here, the updating of the structuralized initial scene configuration information may be adding an additional configuration corresponding to the received additional scene configuration information to the structuralized initial scene configuration information, replacing a replaceable configuration corresponding to the received additional scene configuration information with some configurations of the structuralized initial scene configuration information, or deleting some configurations of the structuralized initial scene configuration information according to the received additional scene configuration information.

According to an exemplary embodiment, a tree node corresponding to the received additional scene configuration information may be added to the DOM tree, a replaceable tree node corresponding to the received additional scene configuration information may be replaced with a node of the DOM tree, or some nodes of the DOM tree may be deleted according to the received additional scene configuration information.

Also, the updating may be performed in real time whenever the additional scene configuration information is received.

the content is rendered according to the updated initial scene configuration information.

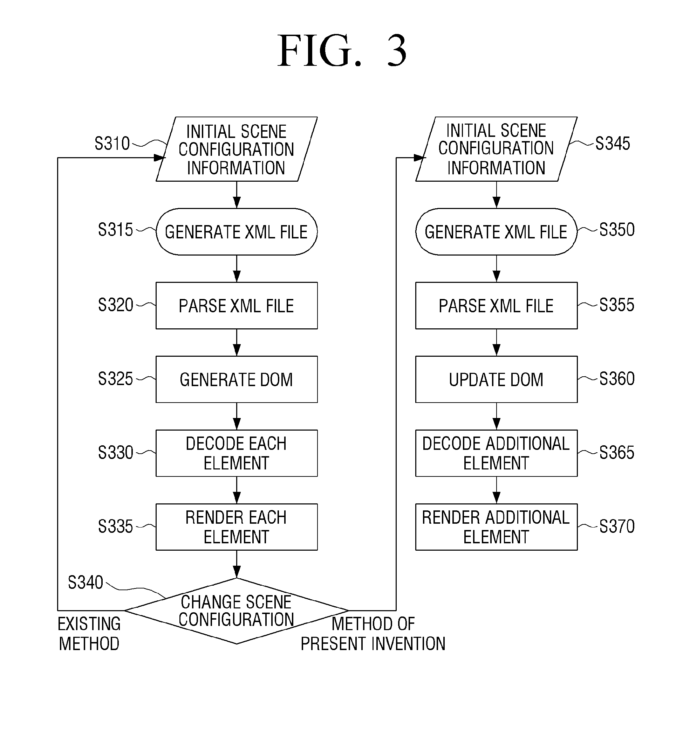

FIG. 3 is a flowchart illustrating the method of FIG. 2 in more detail.

Referring to FIG. 3, transmitting of initial scene configuration information reconfigured when requesting to reconfigure a scene is compared with transmitting of additional scene configuration information. In operation S310, initial scene configuration information is configured. In operation S315, a service provider generates an XML file and transmits the XML file to a terminal. The terminal parses the XML file in operation S320 and generates a DOM in operation S325. The terminal decodes each element according to a DOM structure in operation S330, and renders and consumes each element in operation S330.

In operation S340 (in case of existing method), new initial scene configuration information is generated and consumed through a process as first performed when the scene configuration information is to be reconfigured. In other words, the scene configuration information is configured to generate a new XML file and transmit the new XML file to a terminal. Also, the terminal parses the whole XML file to delete an existing generated DOM, generate a new DOM, and re-decodes each element according to a DOM structure. Also, a screen actually consumed on a display is wholly newly configured and consumed.

In operation S345 (in case of method provided in the present general inventive concept as shown in FIG. 3), only information about an element to be reconfigured is generated as an XML file. Here, in comparison to generating of the whole scene configuration information including elements that do not need to be reconfigured, data on some elements is much less than an amount of data. Also, since the amount of data is small, a smaller number of resources of a server are used to generate an XML file. The XML file includes a text, and thus a data difference does not greatly affect. However, scene configuration information including a text is converted into binary code and then transmitted in a streaming environment, and thus a difference in use of resources may occur in complicated scene configuration information.

In the case of existing method, the XML file is re-parsed from beginning to end. However, in the method of the present general inventive concept, i.e., in operations S350 and 365, only the XML file including a reconfigured element is parsed, and thus an amount of data to be parsed is reduced.

The operation of generating the DOM is divided into a method of deleting the DOM and newly generating a DOM and a method of updating a new element with maintaining the existing DOM. A DOM mainly includes a text, an image, etc. according to a characteristic of a webpage. Therefore, although some elements of the webpage are reconfigured, deleting of the whole DOM and generating a new DOM are not big problems. However, a DOM used in multimedia is to express structures of video and audio. Re-generating of configuration information of the video due to a reconfiguration of another element unrelated to the video results in not providing a service desired by a user and inefficiently using resources of the terminal. Therefore, in the method of the present general inventive concept, video configuration information generated in the DOM is maintained, and only elements such as audio, an image, etc. to be reconfigured are updated (S360). Therefore, a service is constantly provided to the user, and the resources of the terminal are not wasted.

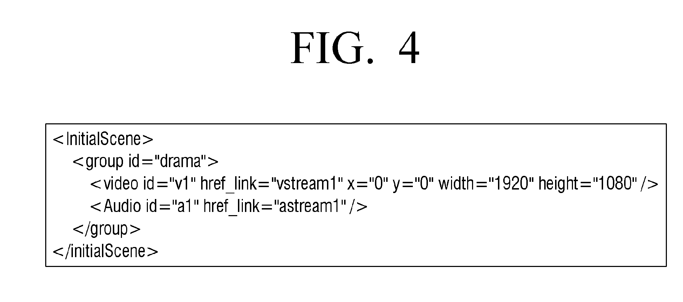

FIG. 4 is a view illustrating an XML file that is written by using existing scene configuration information, according to an exemplary embodiment of the present general inventive concept.

The scene configuration information of FIG. 4 includes link information about a video stream and an audio stream, and a terminal parses the corresponding scene configuration information to generate a DOM.

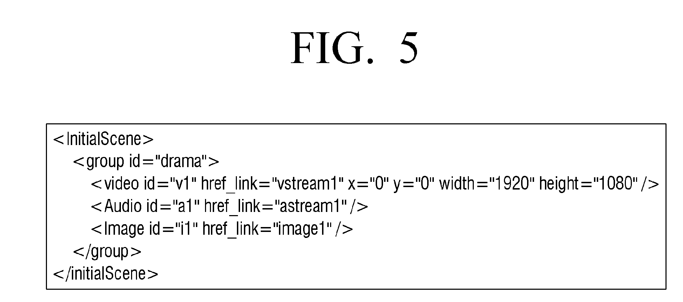

FIG. 5 is a view illustrating an XML file that is written by adding another element to existing scene configuration information, according to an exemplary embodiment of the present general inventive concept.

The scene configuration information of FIG. 5 is scene configuration information that is newly written by a multimedia service provider to additionally insert an image element into a scene configuration including video and audio.

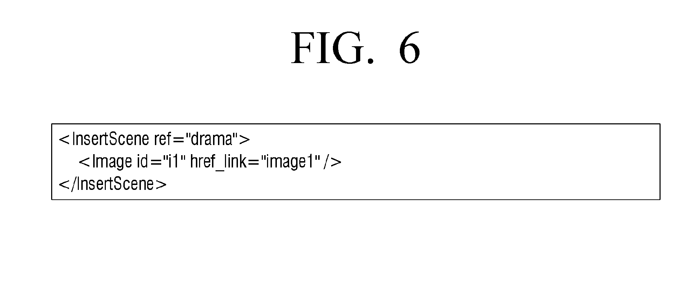

FIG. 6 is a view illustrating an element that is to be added to existing scene configuration information and is individually generated as an XML file, according to an exemplary embodiment of the present general inventive concept.

The scene configuration information of FIG. 6 is additional scene configuration information that is written by a multimedia service provider to insert an image element into a scene configuration including video and audio.

"InsertScene" of FIG. 6 is a command indicating that an element positioned under "InsertScene" is to be added to the initial scene configuration information of FIG. 4, and "Ref" indicates a position of an object of the initial scene configuration information in which an element is to be added.

The initial scene configuration information is described as an XML file having the same format as existing scene configuration information and is transmitted according to the same method as that by which the existing scene configuration information is transmitted. In other words, additional scene configuration information includes an element to be reconfigured and an element of a command to be added, delete, or reconfigured, and a service provider generates the elements as individual XML files separately from the initial scene configuration information and transmits the individual XML files to a terminal.

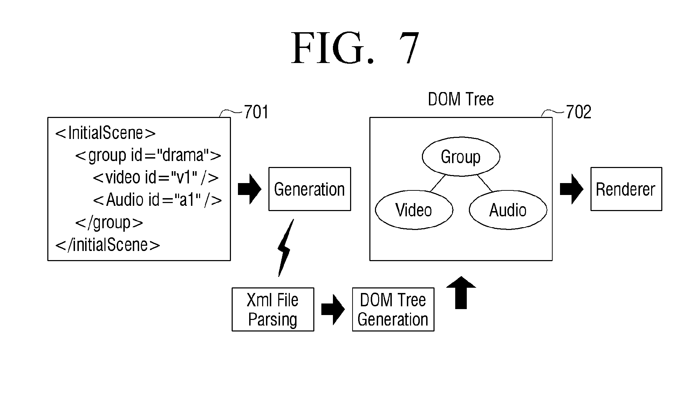

FIG. 7 is a view illustrating an operation of generating the initial scene configuration information of FIG. 4, transmitting the initial scene configuration information to a terminal, and parsing the initial scene configuration information to generate a DOM.

If the terminal receives scene configuration information 701, the terminal parses the scene configuration information 701 to generate a DOM tree 702 and consumes of elements of the DOM tree 702.

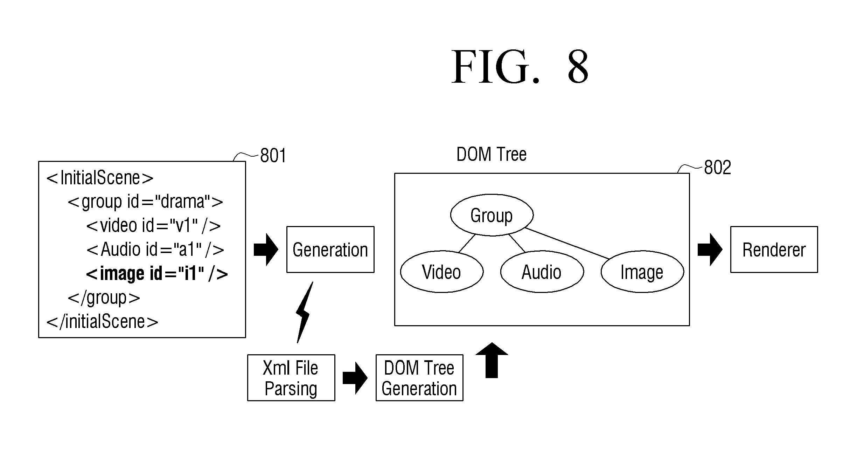

FIG. 8 is a view illustrating an operation of generating an XML file to which an image is added, transmitting the XML file to a terminal, and parsing the XML file to newly generate a DOM.

If the terminal receives reconfigured scene configuration information 801 when parsing the scene configuration information of FIG. 7 and constituting a DOM tree to provide a service, the terminal may re-parse an element to be added and all scene configuration elements of video and audio and generate a DOM tree 802. In other words, the DOM tree 802 is generated by adding only an image element to the DOM tree 702. However, the DOM tree 702 is deleted to generate the new DOM tree 802.

As shown in FIG. 8, scene configuration information of all elements are newly generated to add only some elements, and resources of the terminal are very inefficiently used in an environment in which various types of multimedia are mixed, to newly generate a DOM.

Only an element to be added needs to be updated in order to solve the above-described problems.

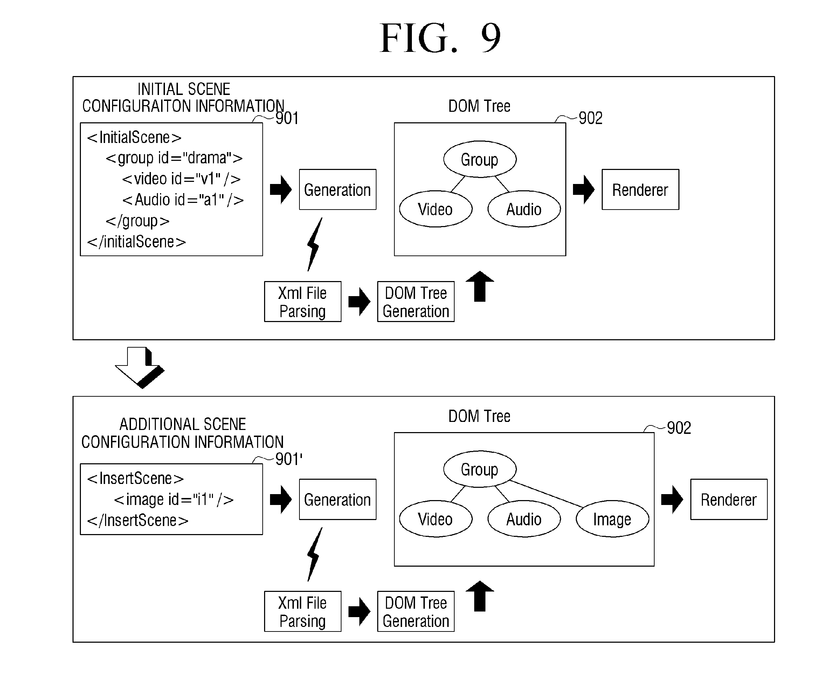

FIG. 9 is a view illustrating a method of generating and transmitting only an element to be reconfigured and updating only an element to be added without deleting a previously generated DOM.

As shown in FIG. 9, a terminal parses scene configuration information 901 and constitutes a DOM tree 902 to provide a service. If additional scene configuration information 901 is received in this case, the terminal parses only an image element to be added and updates only a transmitted element without affecting other elements of an existing constituted DOM tree. In other words, if some elements of an initially configured scene are to be reconfigured in comparison to FIG. 8, scene configuration information of all elements are not newly generated. However, only configuration information of an element that is reconfigured is transmitted, and only a reconfigured element of a currently consumed multimedia service is updated in real time.

In the present exemplary embodiment, only one element is added for convenience of description. However, a technology for transmitting and updating only additional scene configuration information includes a function of adding an element to existing scene configuration information, and deleting and reconfiguring the element, a function of adding, deleting, and reconfiguring a characteristic of the element, and a function of adding, deleting, and reconfiguring a value of each characteristic.

Method of synchronizing contents in hybrid service environment

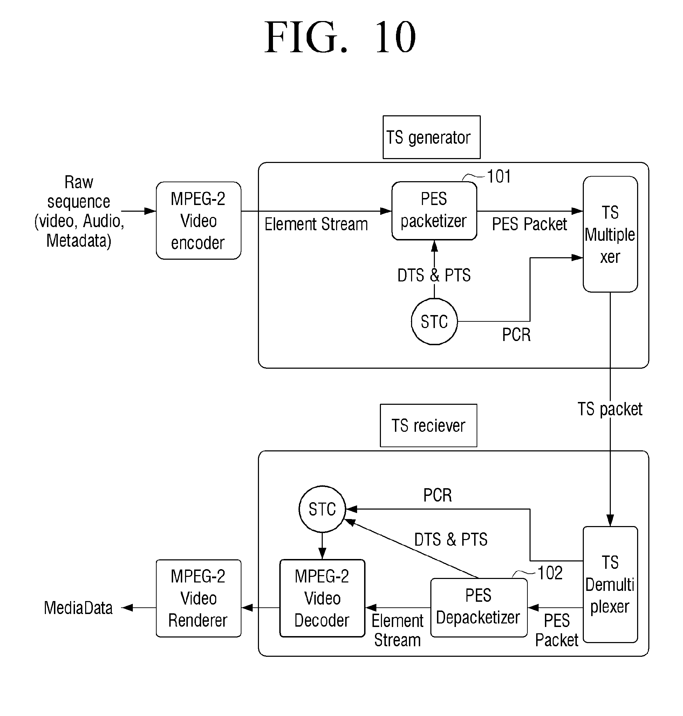

FIG. 10 is a view illustrating a synchronization structure between data of an MPEG-2 TS system that is currently used in a terrestrial digital broadcast.

Referring to FIG. 10, video, audio, and data of an MPEG-2 TS are generated as an element stream through an encoder. The element stream is generated as block data 100 through a packetizing work, wherein the block data 100 is referred to as a packetized elementary stream (PES). Types of data, lengths of the data, and synchronization information between the data are inserted into a PES header, and the synchronization information is used to generate DTS and PTS values with reference to a system timing clock (STC) in order to notify decoding and rendering timings between data. A program clock reference (PCR) value that is generated with reference to generated PES data and the STC is transmitted in a TS packet format to a receiver through a TS multiplexer. The receiver divides the PCR value into audio, video, and metadata through a TS demultiplexer. The receiver also extracts a PCR value of an adaptation field of a TS header to reproduce the same STC clock as that of a broadcasting station and, when DTS and PTS values acquired by depacketizing the PES are equal to each other, starts decoding and rendering. Synchronization between A/V data is possible in a time information format, but it is difficult to check a position of a corresponding scene.

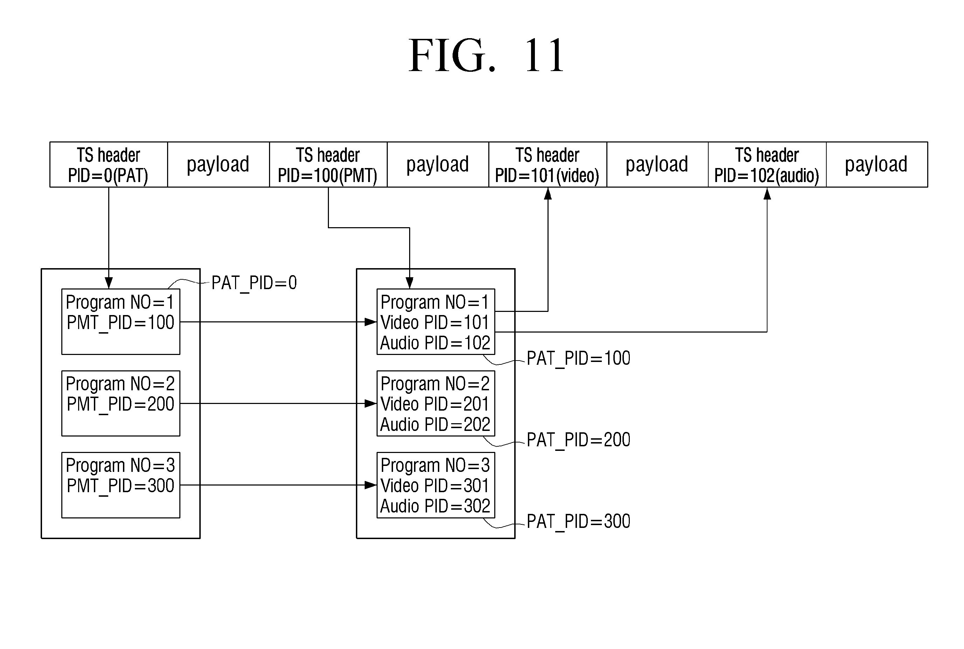

FIG. 11 is a view illustrating a process of classifying data according types through a TS demultiplexer.

A receiver searches TS streaming transmitted through a broadcast network for a program association table (PAT) of which PID (packet ID) defined in MPEG is 0. A TS demultiplexer parses the PAT to check a program number to be transmitted through a corresponding channel and a PID of a PMT. The TS demultiplexer may parse a PMT that will be received later, to check PID values of video, audio, and metadata of the corresponding channel in order to classify data types of a packet.

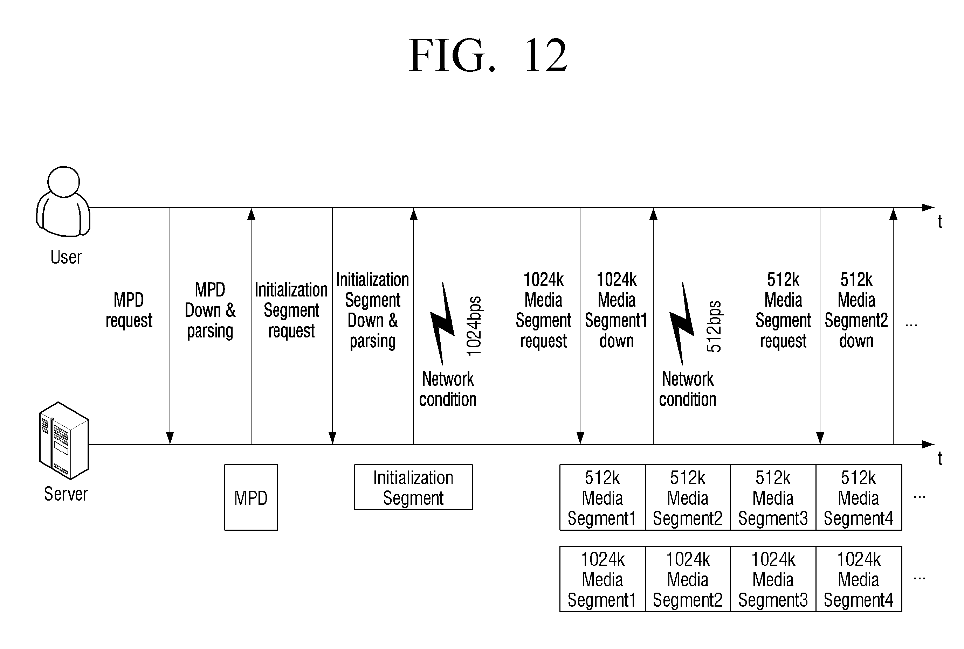

FIG. 12 is a view illustrating a process of a DASH technology as an example of transmitting an additional image to a communication network.

Referring to FIG. 12, DASH refers to a method of transmitting requested media data as data having appropriate quality and size from a server to a client according to a network situation and a terminal environment by using an HTTP. The server provides the client with a media presentation description (MPD) in which metadata and position information about media are described in an xml format. The client parses the MPD to request and receive an initialization segment having initialization information for decoding media data. Also, the client requests media segments that are grouped and stored according to time and quality, if a network is in a normal condition, receives a high-quality media segment, and if the network is in an abnormal condition, receives a low-quality media segment in order to generate streaming.

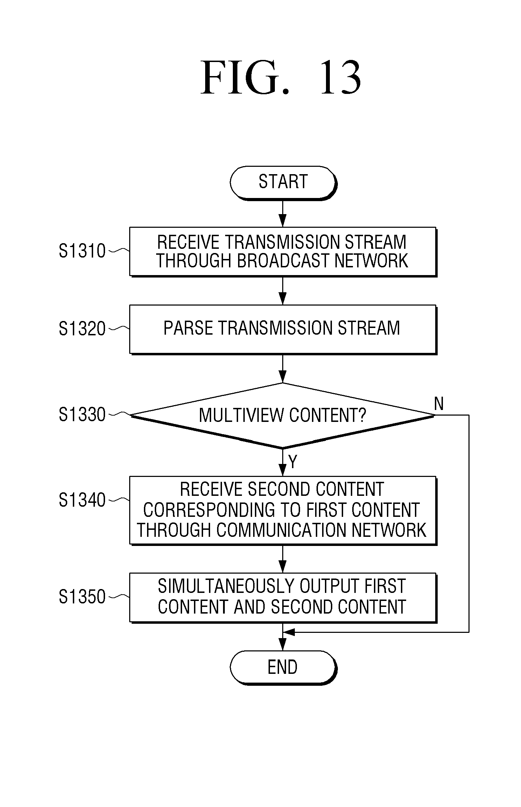

FIG. 13 is a flowchart illustrating a method of synchronizing contents according to an exemplary embodiment of the present general inventive concept.

Referring to FIG. 13, the method includes operation S1310 of receiving a transmission stream, operation S1320 of parsing the transmission stream, operation S1330 of determining whether the transmission stream includes multiview contents, operation S1340 of receiving a second content corresponding to a first content through a communication network, and operation S1350 of simultaneously outputting the first and second contents.

In operation S1310, the transmission stream is received through a broadcast network. Video, audio, data, etc. of the transmission stream may be simultaneously transmitted according to MPEG-2 rules. A header of the transmission stream includes program information constituting the whole transmission stream, time information of a program, control information for controlling a whole system, etc.

In operation S1320, the received transmission stream is parsed. Here, in operation S1320, information included in a PMT may be parsed to determine whether to provide the multiview contents.

If it is determined in operation S1330 that the first content included in the transmission stream is a multiview content, the second content corresponding to the first content is received through the communication network in operation S1340. A process of determining whether a first content is a multiview content will be described later.

In operation S1350, the first and second contents included in the transmission stream are simultaneously output.

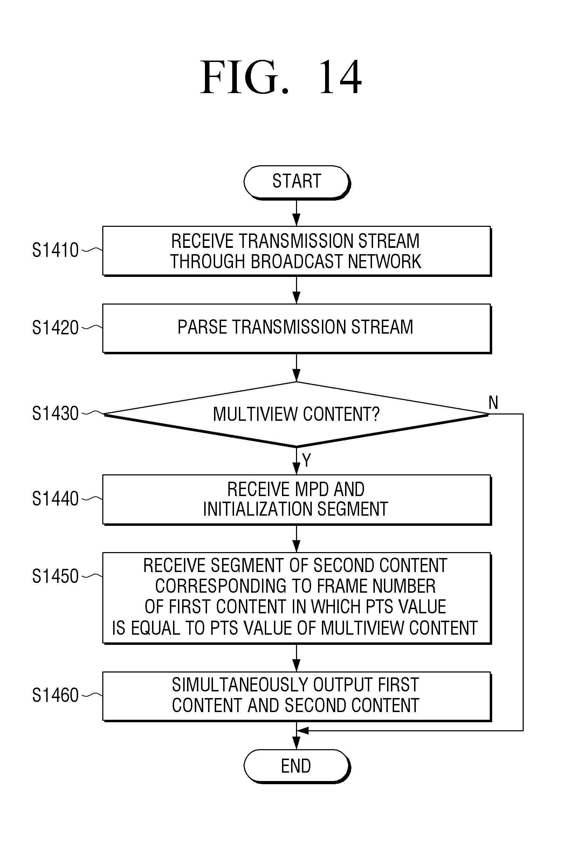

FIG. 14 is a flowchart illustrating a method of synchronizing contents according to another exemplary embodiment of the present general inventive concept.

Referring to FIG. 14, the method includes operation S1410 of receiving a transmission stream, operation S1420 of parsing the transmission stream, operation S1430 of determining whether the transmission stream includes a multiview content, an operation of receiving a second content corresponding to a first content through a communication network, and operation S1460 of simultaneously outputting the first and second contents. Operations S1410, 1420, 1430, and 1460 respectively correspond to operations S1310, S1320, S1330, and 1350, and thus their detailed descriptions are omitted.

The operation of receiving the second content may include operation S1440 of receiving an MPD and an initialization segment and operation S1450 of receiving a segment of the second content corresponding to a frame number of the first content of which a presentation time stamp (PTS) value is equal to a PTS value of the multiview content.

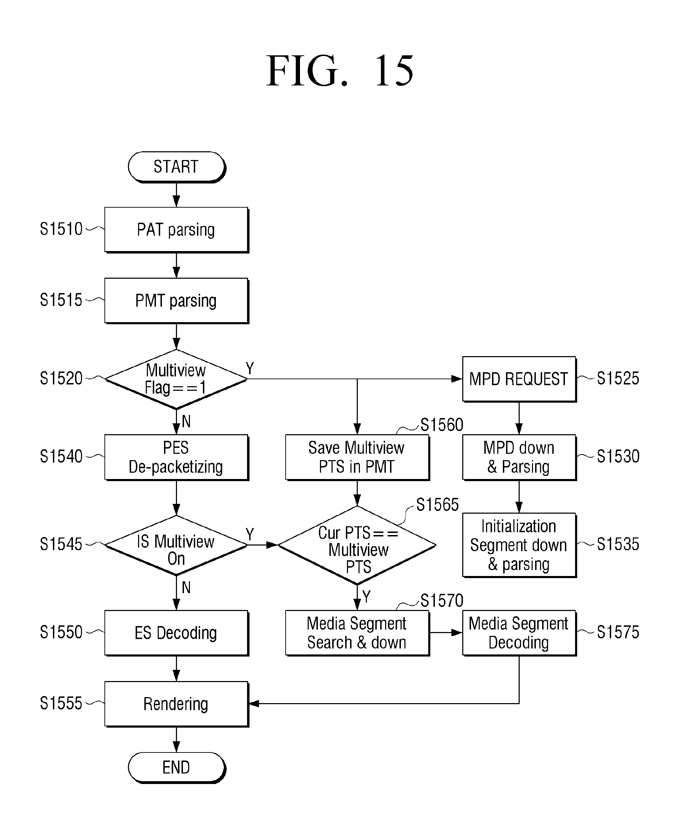

FIG. 15 is a flowchart illustrating a method of adding Multiview_Descriptor providing Frame_num to a PMT to synchronize multimedia contents, according to an exemplary embodiment of the present general inventive concept.

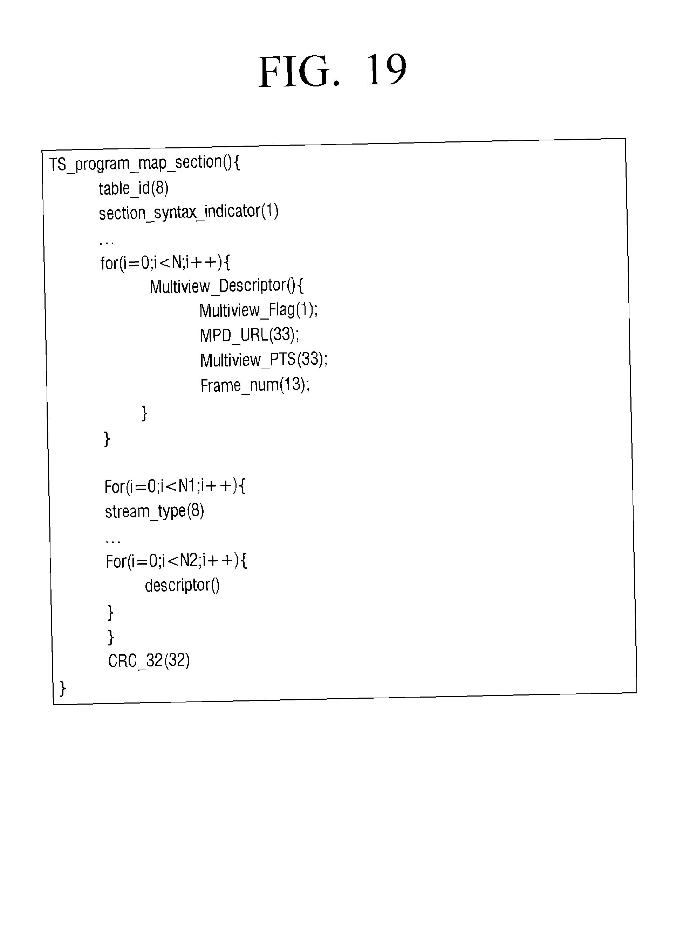

A PAT of a TS transmitted through a broadcast network is parsed in operation S1510 to recognize PMT_PID in order to parse an MPT in operation S1515. Therefore, in operation S1520, Multiview_Descriptor shown in FIG. 19 is checked. If a value of Multiview_Flag is described as 0 in operation S1520, a normal broadcast service is provided in operations S1540 through S1555. If the value of Mutiview_Flag is described as 1 in operation S1520, a multiview timing is known to a viewer. A terminal requests a MPD according to a server address described in MPD_URL in operation S1525, parses the MPD in operation S1530, and downloads and parses an initial segment to prepare decoding in operation S1535. If a PTS value of a PES received through a TS packet is equal to multiview_PTS in operation S1565, the terminal checks Frame_num to request and download a media segment including a corresponding scene and simultaneously plays TS and DASH media in order to synchronize the TS and DASH media in operations S 1570, S1575, and S1555.

Differently from this, the operation of receiving the second content may include: an operation (not shown) of receiving an MPD and an initialization segment; and an operation (not shown) of calculating a current frame number of the first content based on a difference between a PTS value of a current frame of the first content and a PTS starting value and receiving a segment of the second content corresponding to the current frame number of the first content.

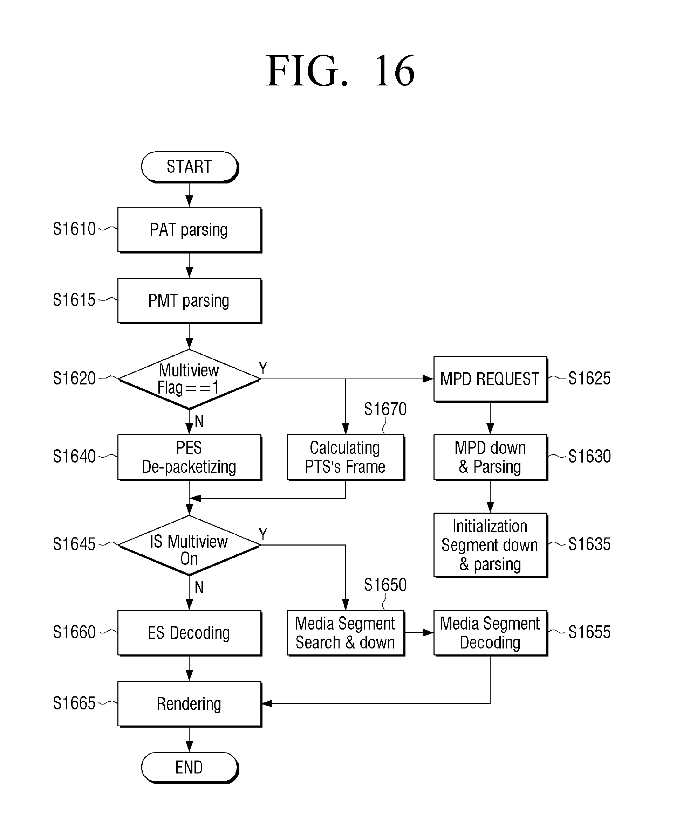

FIG. 16 is a flowchart illustrating a method of adding Multiview_Descriptor providing Init_PTS to a PMT to synchronize multimedia contents.

Referring to FIG. 16, in operation S1620, Multivive_Descriptor added to the PMT is checked. The method goes through operations S1640 ∼ in which Multiview_Flag is 0 and operations S1625- of downloading and parsing an MPD and an initialization segment. In operation S1670, the terminal checks a PTS of a scene including a starting point of a program through Init_PTS of Multiview_Descriptor from a time when a viewer requests multiview and calculates a position of the corresponding scene based on a value that is acquired by subtracting Init_PTS from a current PTS, dividing the subtraction result by a difference between PTSs, and adding 1 to the division result. In operations S1650 and 1655, the terminal requests, downloads, and decodes a media segment including the same scene. In operation S1665, the terminal simultaneously plays the TS and DASH media to synchronize the TS and DASH media. For example, if a current PTS is 1800, Init_PTS is 1000, and an interval between PTSs is 100, the terminal requests a media segment including a ninth frame.

The operation of receiving the second content may include: an operation (not shown) of receiving an MPD and an initialization segment; and an operation (not shown) of calculating time information of the first content based on a difference between a SMPTE Timecode value and a SMPTE Timecode starting value of the first content and receiving a segment of the second content corresponding to the time information of the first content.

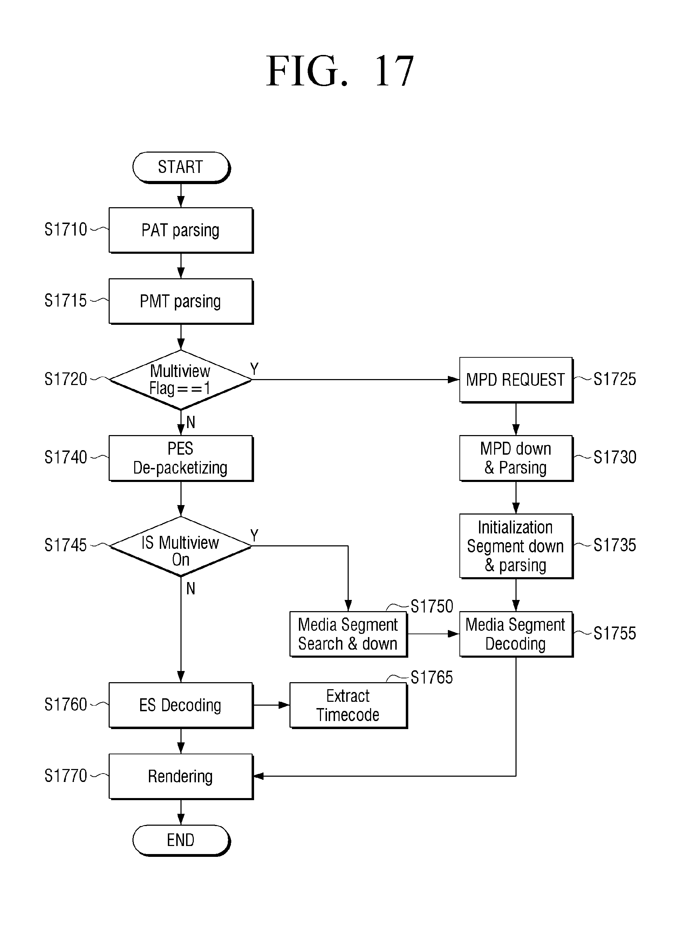

FIG. 17 is a flowchart illustrating a method of synchronizing contents by using SMPTE Timecode of broadcast network and communication network media according to an exemplary embodiment of the present general inventive concept.

SMPTE Timecode (SMPTE 12M) is a standard that is established for frame unit labeling of video or film in SMPTE, and Timecode may be inserted into film, video, audio, etc. and operates as a reference for edition and synchronization. If the SMPTE Timecode that is managed on a content level is transmitted to an encoder, the SMPTE Timecode may be recorded on a stream in each encoding operation according to a compression method of each content. As a result, contents provided through a broadcast network and contents provided through a communication network may include the same SMPTE Timecode of frame unit on a transmission stream. In operation S1720, Multiview_Descriptor that is added to a PMT is checked. The method of FIG. 17 goes through operations S1740 ∼ in which Multiview_Flag is 0 and operations S1725 through S1735 of downloading and parsing an MPD and an initialization segment. Here, the transmitted MPD or initialization segment may include an Init_Timecode value indicating starting SMPTE Timecode of media. In operation S1750, a terminal calculates a position of a corresponding scene based on a value that is acquired by subtracting Init_Timecode from current Timecode through Timecode of contents provided through a broadcast network form a time when a viewer requests multiview and adding 1 to the subtraction result, and requests and downloads a media segment including the same scene. In operations S1755 and 1770, the terminal simultaneously plays a TS provided through a broadcast network and DASH media provided through a communication network to synchronize the TS and DASH media. A method of simultaneously playing contents provided through a broadcast network and contents provided through a communication network when Timecodes are equal to each other in order to accurately synchronize the contents may be used.

In operation S1725, the terminal transmits Timecode of the contents provided through the broadcast network and an MPD request message to a server. In operation S1730, a receiver downloads or parses Frame_num corresponding to the corresponding Timecode and an MPD file. The receiver checks Frame_num to request and download a media segment including a corresponding scene and then simultaneously play a TS and a DASH media in order to synchronize the TS and the DASH media.

In the operation of receiving the segment of the second content, a second content, which corresponds to a frame positioned behind the preset number of frames more than a current frame of the first content, may be received in consideration of a delay of the communication network.

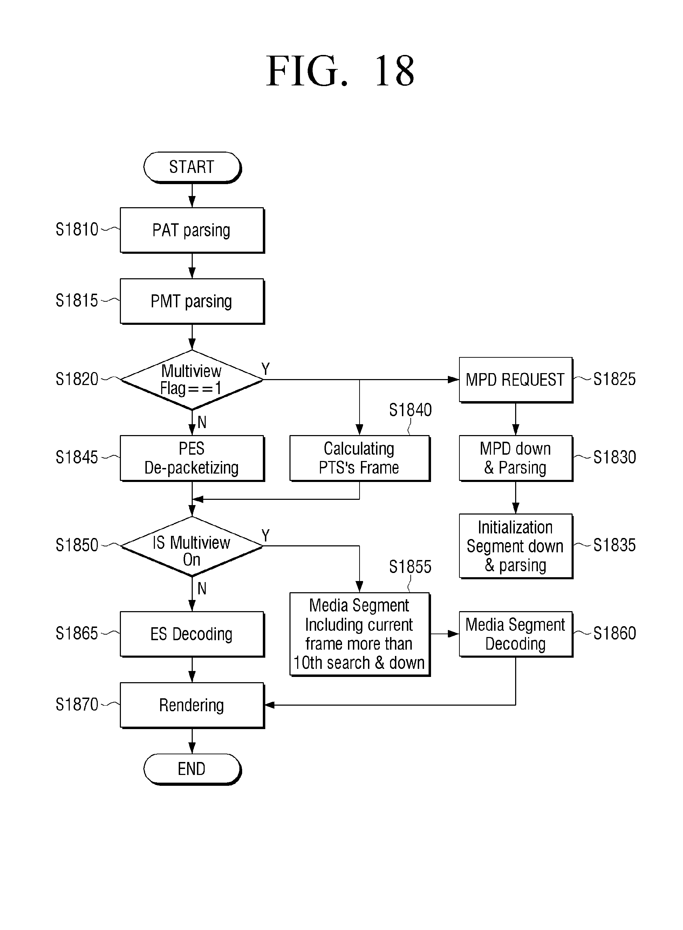

FIG. 18 is a flowchart illustrating a method of synchronizing multiview media contents that request a future scene in consideration of a network delay, according to an exemplary embodiment of the present general inventive concept.

Referring to FIG. 18, in operation S1820, Multiview_Descriptor of FIG. 19 that is added to a PMT is checked. The method of FIG. 18 goes through operations S1845 ∼ in which Multiview_Flag is 0 and operations S1825 ∼ of downloading and parsing an MPD and an initialization segment. In operation S1840, a terminal calculates a current frame position when a viewer requests multiview. In operation S1855, the terminal calculates a position of a corresponding scene, and requests and downloads a media segment including a future scene of a current scene in consideration of a delay of a communication network. In operations S1860 and 1870, the terminal simultaneously plays a TS media scene and a DASH media scene to synchronize the TS media scene and the DASH media scene when the TS media scene and the DASH media scene are equal to each other.

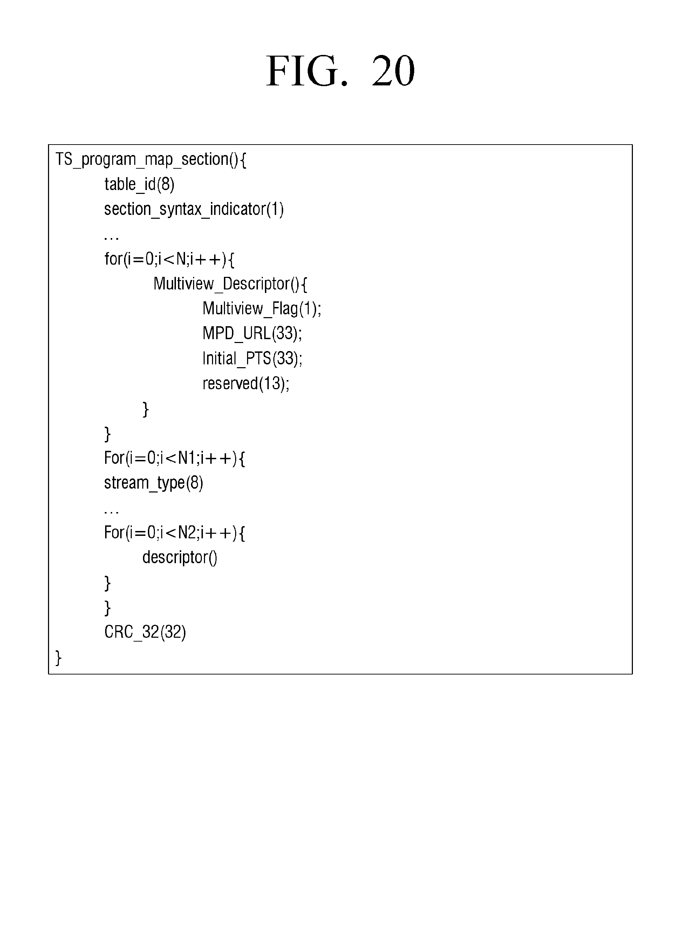

FIG. 19 is a view illustrating a program code in which Multiview_Descriptor providing Frame_num is added to the PMT of FIG. 15. FIG. 20 is a view illustrating a program code in which Multiview_Descriptor providing Init_PTS is added to the PMT of FIG. 16.

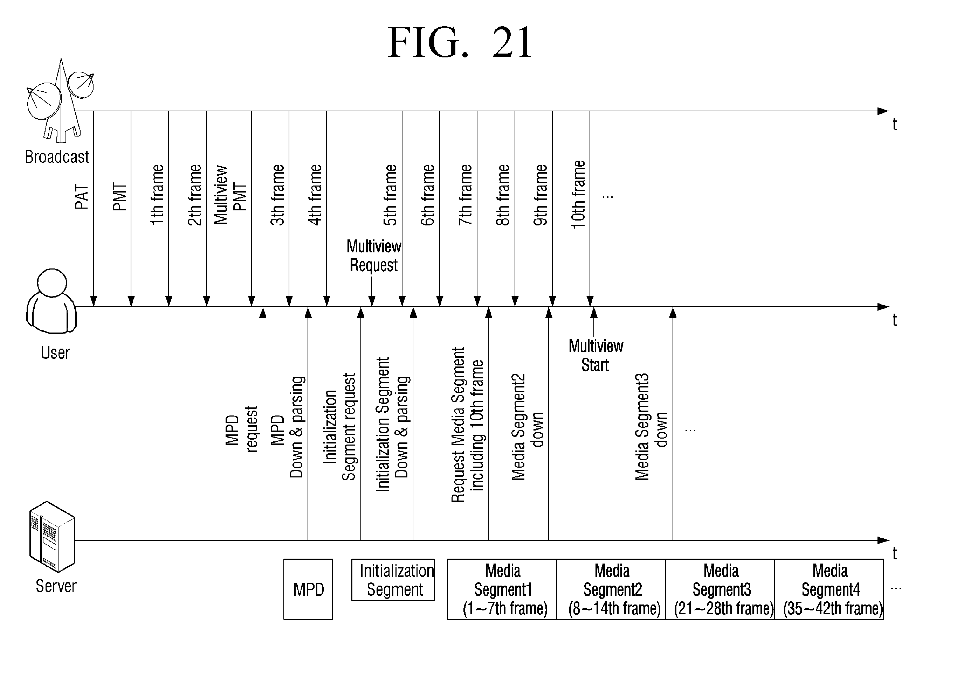

FIG. 21 is a flowchart illustrating a process of a terminal that receives and synchronizes contents between a server and a broadcasting station, according to various exemplary embodiments of the present general inventive concept.

Displaying of event-based broadcast contents

A method of displaying event-based broadcast contents will now be described.

### Breaking new scenario

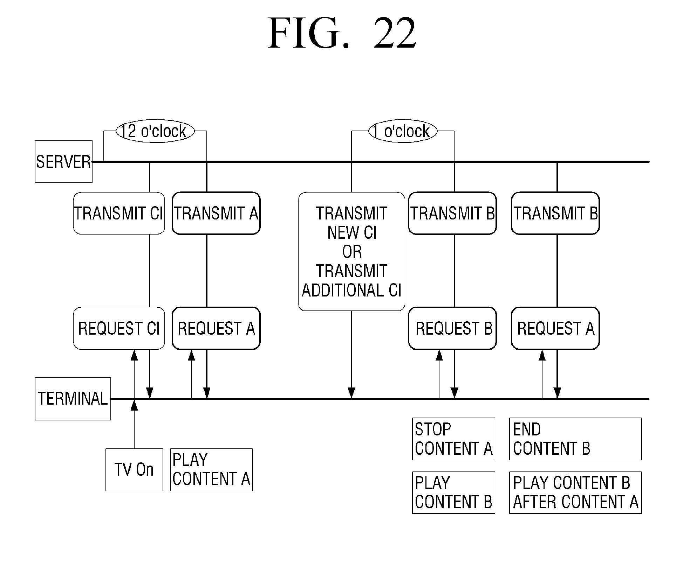

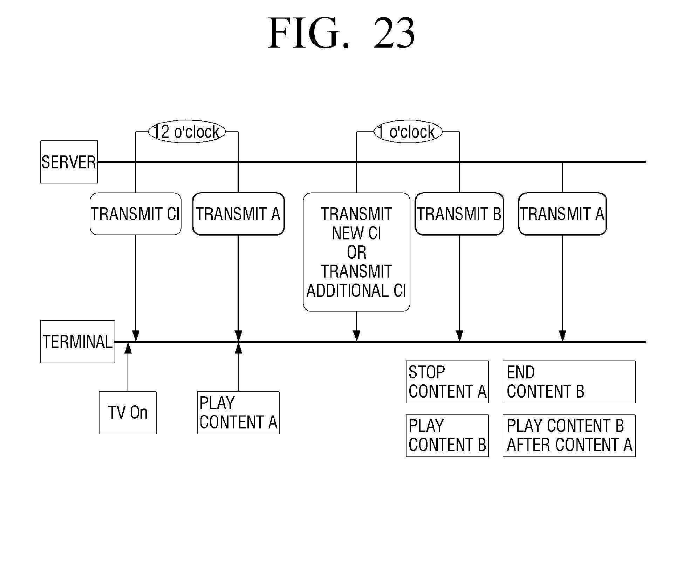

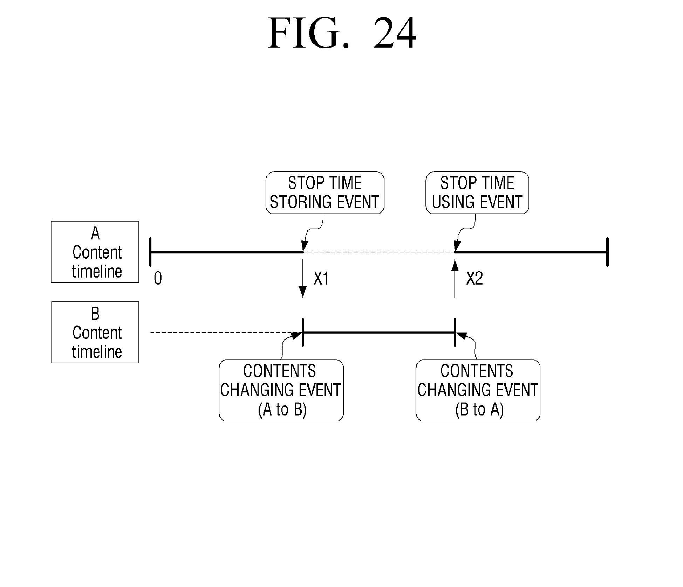

FIG. 22 is a view illustrating an on-demand breaking news scenario as an example of a method of displaying an event-based broadcast content. FIG. 23 is a view illustrating a push-type breaking news scenario according to another exemplary embodiment of the present general inventive concept. FIG. 24 is a view illustrating a timeline of a breaking news scenario.

A user receives a CI from a server through a TV, and a terminal parses the CI, and receives and plays video and audio included in the CI. If an urgent disaster content is to be transmitted in the middle of providing a service based on the corresponding CI, a service provider wants to transmit a disaster content instead of main video that the service provider currently provides. Here, the server transmits a new CI that is replaced with a disaster broadcast or transmits only a part of the CI to be reconfigured as additional scene configuration information.

The terminal parses the new CI to stop consuming a main content and consumes the disaster content. If consuming of the disaster content is ended, the terminal re-consumes the main content, which is previously serviced, from a time when consuming of the main content stops.

FIG. 22 illustrates providing of contents in an on-demand format from a server to a terminal based on a CI transmitted from the terminal. As shown in FIG. 23, if a push-type service is provided, CI may be transmitted from the terminal to the server without an additional request, and contents may be transmitted at a corresponding time. Push and on-demand service types are mixed and provided to transmit CI and video contents.

FIG. 24 illustrates a timeline of a breaking news scenario. Timelines of content consumption are provided by using only an event without using an additional scene time. If a change from content A and to content B is requested at particular time X1, a content is changed by using an event that notifies a start and an end of the content, and a terminal generates an event for storing a stop time to store a stop point of the content A. If the content B is ended at particular time X2, the content B is changed into the content A by using an event for notifying an end and a start of the content B and then is consumed from a time when the content A stops, by using an event using a stop time

### Relay scenario

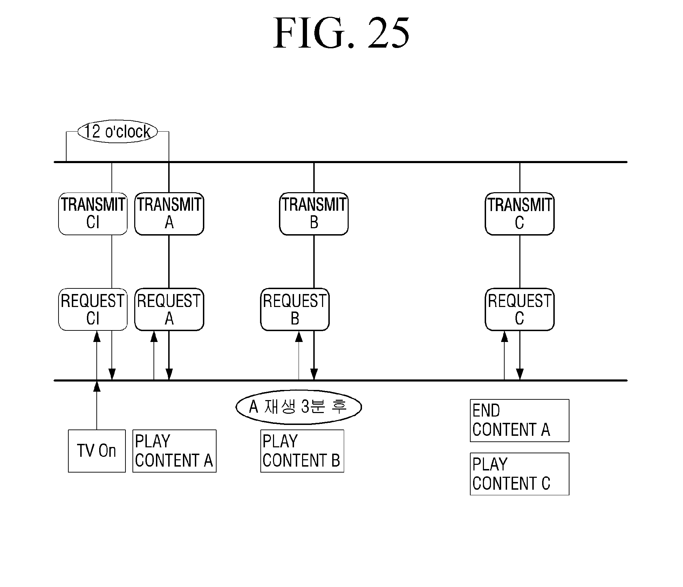

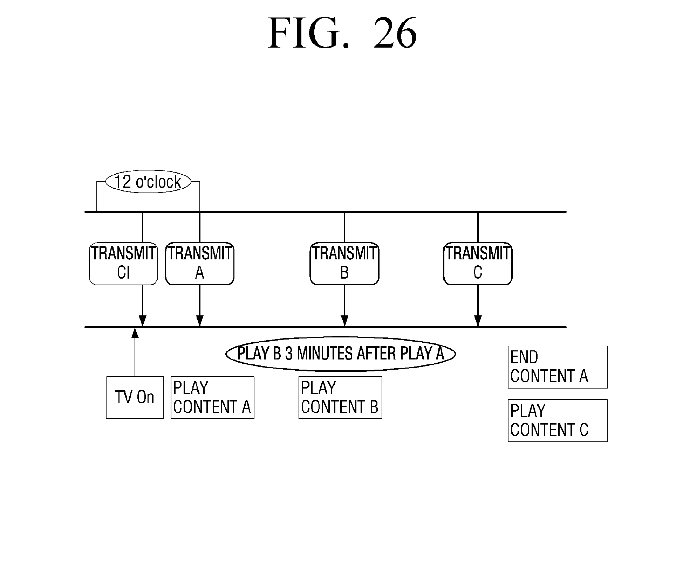

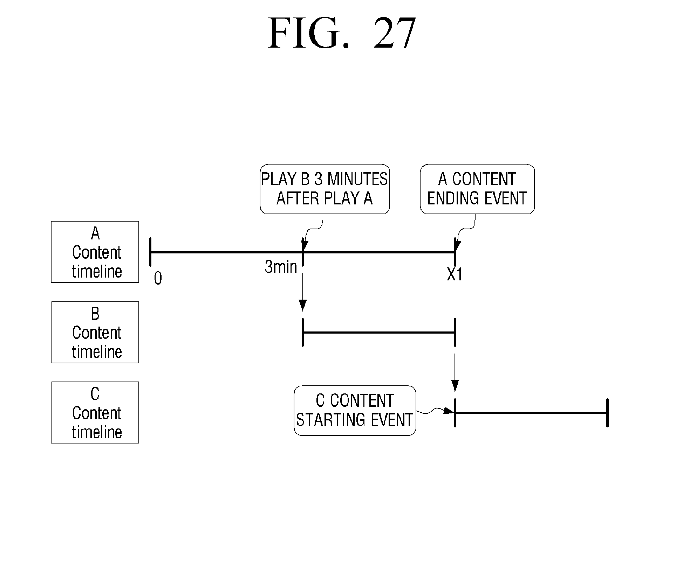

FIG. 25 is a view illustrating an on-demand relay scenario as an example of a method of displaying event-based broadcast contents. FIG. 26 is a view illustrating a push-type relay scenario according to another exemplary embodiment of the present general inventive concept. FIG. 27 is a view illustrating a timeline of a relay scenario.

Referring to FIG. 25, a user receives CI from a server through a TV. A terminal parses the CI, and is provided with and plays video and audio included in the CI.

Video A is a content of an inning of baseball game, and video B is played along with the video A 3 minutes after the video A starts to be consumed. After one inning of the baseball game is finished, a service of the video A is ended, and video C of advertisement is sequentially played.

FIG. 25 illustrating contents that are provided in an on-demand format from a server to a terminal based on CI transmitted from the terminal. As shown in FIG. 26, if a push-type service is provided, the terminal may transmit CI to the server without an additional request and then transmit contents at a corresponding time. Also, push-type and on-demand services are mixed and provided to transmit CI and video contents.

FIG. 27 illustrates a timeline of a sports relay scenario. Timelines of content consumption are provided by using only an event without using an additional scene time. Playing of content B starts at a time when 3 minutes passes based on a media time of content A. If the content A is ended at particular time X1, consuming of content C starts by using an event notifying an end of the content A.

### Multiview scenario

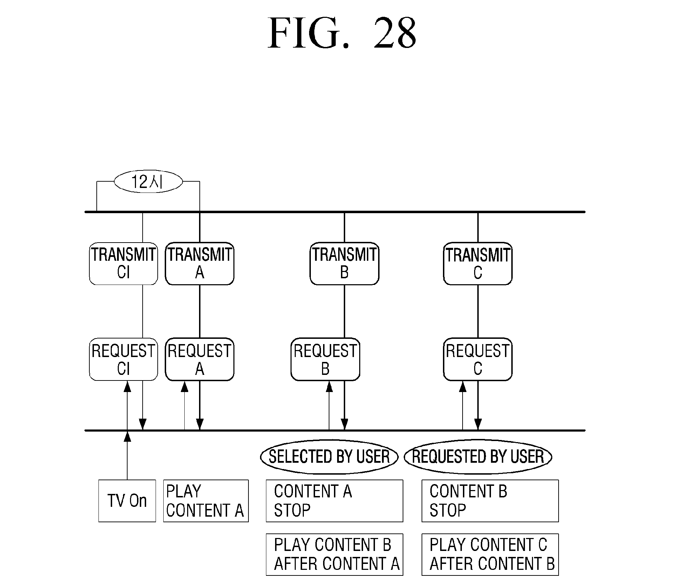

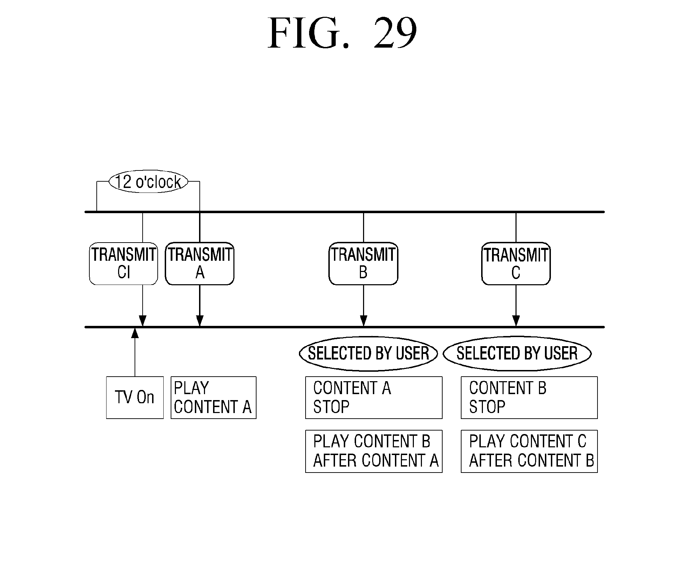

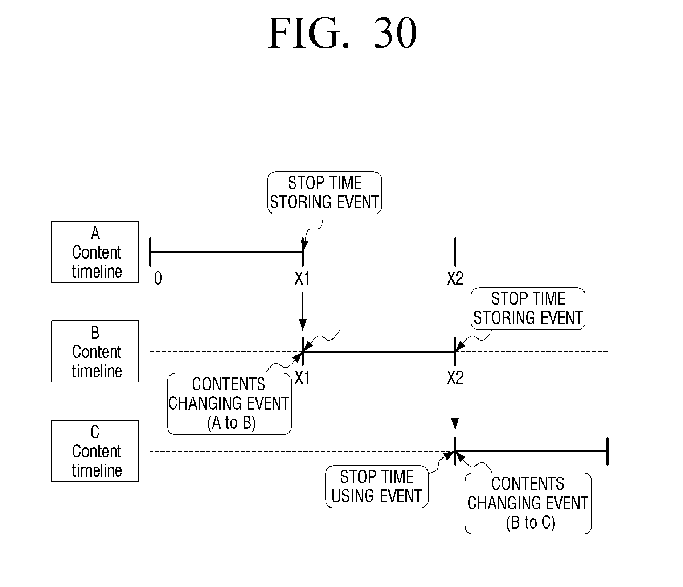

FIG. 28 is a view illustrating an on-demand multiview scenario as an example of a method of displaying event-based broadcast contents. FIG. 29 is a view illustrating a push-type multiview scenario according to another exemplary embodiment. FIG. 30 is a view illustrating a timeline of a multiview scenario.

A user receives CI of multiview from a server through a TV. A terminal parses the CI, and is provided with and plays video A and audio of a front time included in the CI.

The user requests video of a time that is changed to the right during viewing. The terminal stores a time at which video A is consumed and stops consuming the video A. The terminal receives video B corresponding to a time when the video A is consumed. Also, if the user requests another time, the video B stops according to the same process as the previous process, and video C is consumed from a time when the video B stops.

FIG. 28 illustrates contents that are provided in an on-demand formation from a server to a terminal based on CI transmitted to the terminal. If a push-type service is provided as shown in FIG. 29, the terminal may transmit the CI to the server without an additional request and then transmit contents at a corresponding time. Transmission methods of two services are different from each other in a multiview scenario. In other words, only a particular content requested by the user is transmitted in an on-demand environment. However, in a push environment, contents A, B, and C are transmitted, and one of contents that are not requested by the user but are transmitted is selected and displayed. Therefore, a service such as multiview may use many bandwidths in a push-based environment and thus is difficult to be provided as an actual service.

Therefore, push-type and on-demand services are mixed and provided to transmit CI and video contents, but an on-demand environment is appropriate to transmit contents B and C of a corresponding scenario.

FIG. 30 is a view illustrating a timeline of a multiview service scenario. Timelines of contents are provided by using only an event without using an additional scene time. If a user requests a content of another time at particular time X1, an event, which stores a time when content A stops, occurs, and content B receives the event and starts to be consumed from the particular time X1. Similarly, if the user requests a content of another time, an event, which stores a time when the content B stops, occurs, and content C receives the event and starts to be consumed from a time X2.

### Requirements

The following functions are required to provide the above-described scenarios.
A. CI includes initial scene configuration information and additional scene configuration information for transmitting an element that is added or reconfigured on service
B. Synchronization (time stamp) of individual AV of an asset (content) and a timeline (100 minute assets (contents)) are independent according to contents. (Being standardized through current DTS, PTS, etc.)
C. The following events are defined to describe time correlations of contents constituting a (package based-) CI.
   1) An event notifying a start of consumption of each asset may be defined in an event of the CI. (The event is required in all of three scenarios.)
   2) An event notifying an end of consumption of each asset may be defined in the event of the CI. (The event is required in breaking news and sports relay scenarios.)
   3) In the event of the CI, a consumption time (stopped time) of each asset may be stored in a terminal and transmitted to consume another asset. (The consumption time is required in breaking news and multiview scenarios.)
   4) An event is generated through a dependency action and a world time between actions/contents of the user. (The event is required in all of three types of scenarios.)
D. The CI knows a play order between individual assets (contents).

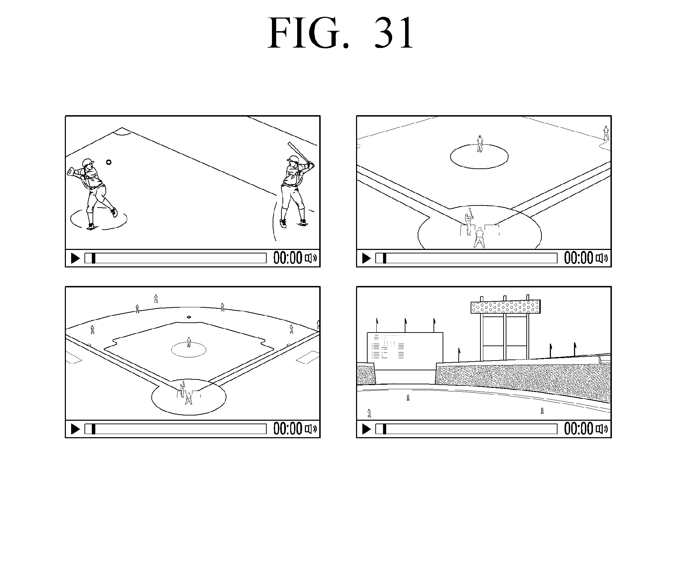

The following technical structures may be considered to satisfy the above-described requirements. FIG. 31 is a view illustrating an individual media time of a multiview scenario according to an exemplary embodiment of the present general inventive concept.

A. In order to satisfy the requirement A, initial scene configuration information and additional scene configuration information are separately transmitted on service. Also, if the additional scene configuration information is received, a part of a DOM generated as the initial scene configuration information is updated. (This has been described in the previous part of the present specification.)

B. In order to satisfy the requirement B, a whole timeline of one package such as a scene time does not exist. However, each asset synchronizes AV by using a media time (time stamp) or has an independent timeline. In other words, as shown in FIG. 31, multiview videos constituting one package respectively have media times, and may be played independently or along with video of another time.

C. In order to satisfy the requirement C, CI describes time information of assets of an MMT package, is not based on a scene time of an existing scene configuration technology, and describes time correlations based on an event. Also, the CI describes space information of the assets of the MMT package and refers to a technology of SMIL or LASeR.

D. CI of a package describes a play order and schedule of the package through media times of individual assets and relations between the assets without a scene time.

### Definition & type

Events as described below are used as elements described in CI and attribute values of the elements.
A. ev:start - Indicates that consumption of an independent asset starts. This occurs when a content of a corresponding ID is consumed. (Requirement C.1)
   - type:ID - Indicates an ID of a starting asset.
B. ev:end - Indicates that consumption of the independent asset is ended. This occurs when the content of the corresponding ID is ended. (Requirement C.2)
   - type:ID - Indicates an ID of an ending asset.
C. ev:pushtime - Stores a consumption time value of the independent asset. (Requirement C.3)
   - type:ID - Indicates an ID of an asset of a time value that is to be stored.
D. ev:poptime - Takes a storing time value of the independent asset out. (Requirement C.3)
   - type:ID - Indicates an ID of an asset of the storing time value.

### Method of displaying contents

The above-described exemplary embodiments may be described by methods that will be described later.

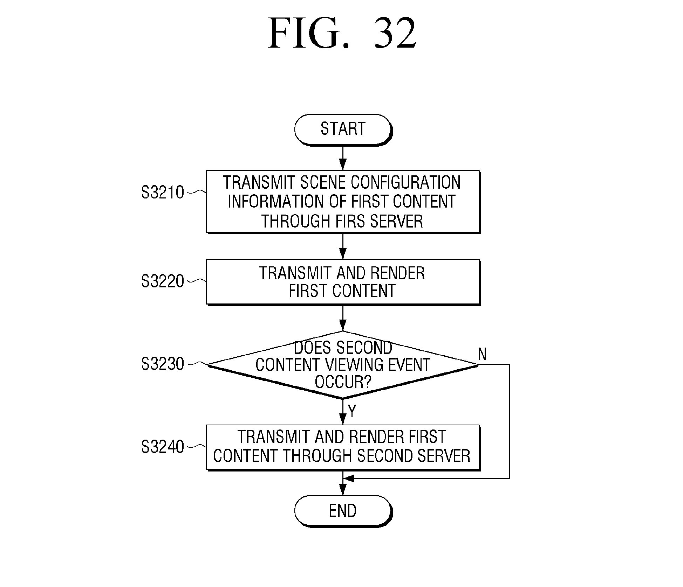

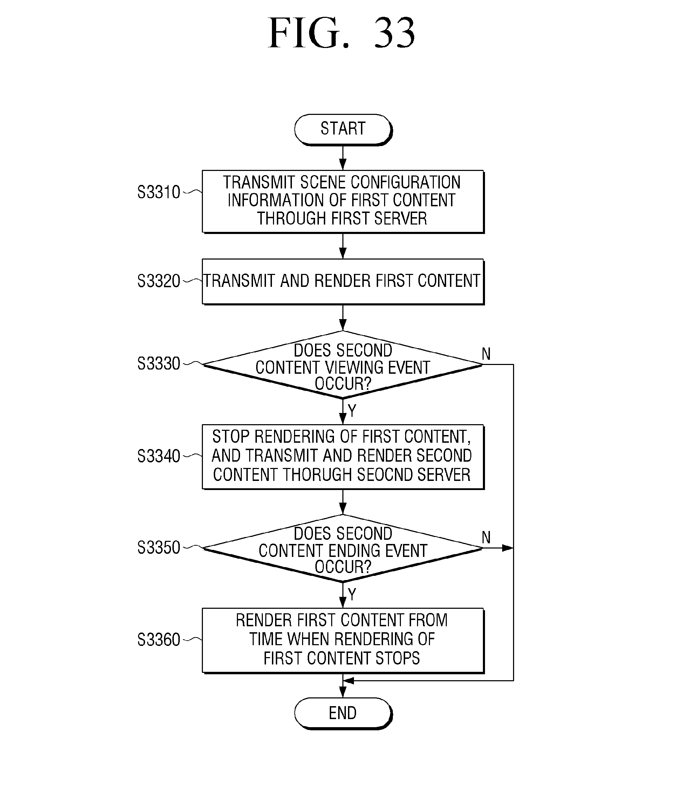

FIGS. 32 and 33 are flowcharts illustrating methods of displaying broadcast contents according to various exemplary embodiments of the present general inventive concept.

Referring to FIG. 32, in operation S3210, a first server transmits scene configuration information of a first content that is written in a markup language. In operation S3220, the first server transmits and renders the first content based on the scene configuration information of the first content. If the scene configuration information of the first content is reconfigured, updating of the scene configuration information according to the above-described exemplary embodiment may be performed. If a second content viewing event occurs in operation S3230, a second server transmits and renders a second content in operation S3240.

Referring to FIG. 33, in operation S3310, a first server transmits scene configuration information of a first content that is written in a markup language. In operation S3320, the first server transmits and renders the first content based on the scene configuration information of the first content. If a second content viewing event occurs in operation S3330, the rendering of the first content stops, and a second server transmits and renders a second content in operation S3340. If an event for ending rendering of the second content occurs in operation S3350, the first content is rendered from a time when the rendering of the first content stops in operation S3360.

If the second content viewing event occurs as described in the above-described exemplary embodiment, i.e., a plurality of related contents are received from different external devices, the second server may synchronize the second content with the first content to transmit and render the synchronized contents.

### Elements for describing examples

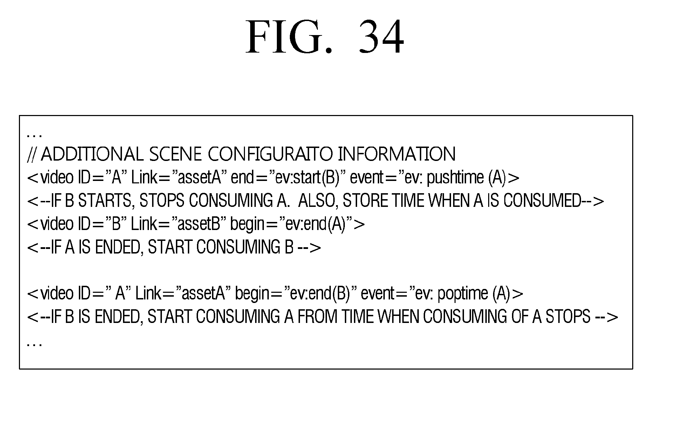

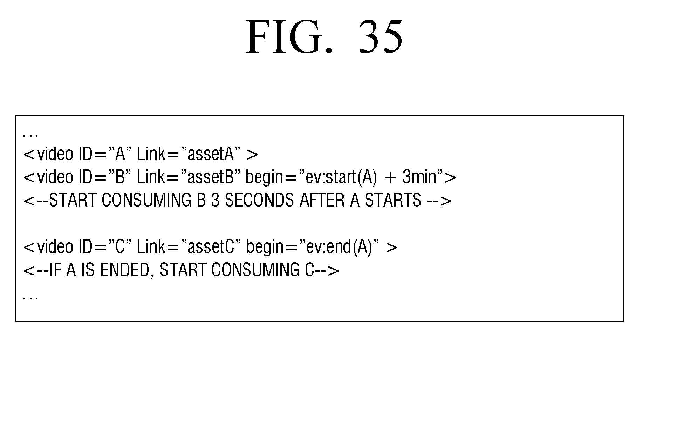

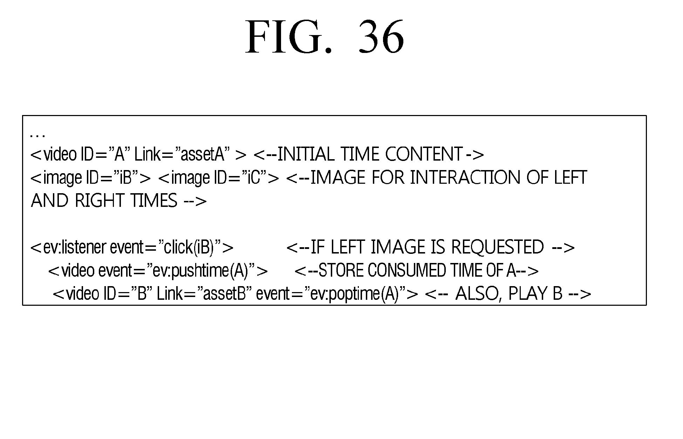

FIG. 34 is a view illustrating additional scene configuration information that is received when an event of a breaking news scenario occurs, according to an exemplary embodiment of the present general inventive concept. FIG. 35 is a view illustrating scene configuration information including information about processing of an event of a relay scenario, according to an exemplary embodiment of the present general inventive concept. FIG. 36 is a view illustrating scene configuration information including information about processing of an event of a multiview scenario according to an exemplary embodiment of the present general inventive concept.
Link: referred to as an ID of an asset. (MMT:E1-CI)
Begin: describes time information starting a corresponding element. (SMIL)
End: describes time information ending a corresponding element. (SMIL)
ev:listener: occurrence condition of an event (LASeR)

### Recording medium

A method of displaying contents, a method of synchronizing contents, and a method of displaying broadcast contents as described above may be realized as programs including executable algorithms. The programs may be stored and provided on a non-transitory computer-readable medium.

The non-transitory computer readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

### Display device

A display device 100 that receives and displays contents according to the above-described method will now be described.

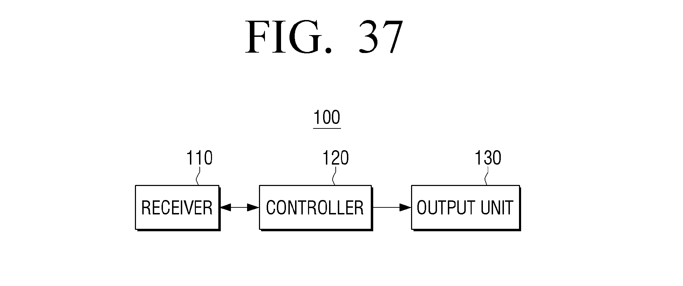

FIG. 37 is a block diagram illustrating a structure of the display device 100, according to various exemplary embodiments of the present general inventive concept.

Referring to FIG. 37, the display device 100 according to the various exemplary embodiments of the present general inventive concept includes a receiver 110, an output unit 130, and a controller 120.

The receiver 110 receives initial scene configuration information of a content written in a markup language and the content from an external device. The receiver 110 includes various types of communication means to be connected to the external device in order to receive information. The markup language may be an XML.

The receiver 110 may include a broadcast communication module and may be controlled by the controller 120 to receive a broadcast signal (for example, a TV broadcast signal, a radio broadcast signal, or a data broadcast signal) transmitted from a broadcasting station through a broadcast communication antenna (not shown) and broadcast-added information (for example, an electric program guide (EPS) or an electric service guide (ESG)). The display device 100 extracts content data included in the received broadcast signal to perform signal-processing as described above.

The output unit 130 outputs the received content. The output unit 130 includes an audio output unit including a speaker and a display unit. The display unit is controlled by the controller 120 to display a multimedia content, an image, a moving picture, a text, or the like.

The display unit may be realized as various types of display technologies such as a liquid crystal display (LCD) panel, a plasma display panel (PDP), a vacuum fluorescent display (VFD), a field emission display (FED), an electro-luminescence display (ELD), etc. The display unit may also realized as a flexible display, a transparent display, or the like.

The controller 120 controls an overall operation of the display device 100. In particular, the controller 120 controls to parse and structuralize the initial scene configuration information, and render and output the content according to the structuralized initial scene configuration information. The structuralizing process may parse the initial scene configuration information to constitute a DOM tree.

Also, if the receiver 110 receives additional scene configuration information of the content from the external device, the controller 120 controls to update the structuralized initial scene configuration information based on the received additional scene configuration information, and render and output the content according to the updated initial scene configuration information.

Here, the updating process may be performed by adding an additional configuration corresponding to the received additional scene configuration information to the structuralized initial scene configuration information, replacing a replaceable configuration corresponding to the received additional scene configuration information with some configurations of the structuralized initial scene configuration information, or deleting some configurations of the structuralized initial scene configuration according to the received additional scene configuration information.

In detail, the updating process may be performed by adding a tree node corresponding to the received additional scene configuration information to the constituted DOM tree, replacing a replaceable tree node corresponding to the received additional scene configuration information with some nodes of the constituted DOM tree, or deleting some nodes of the constituted DOM tree according to the received additional scene configuration information.

Also, a display device may update scene configuration information to display contents and may display contents synchronized according to a content synchronization method in a hybrid service environment or display event-based broadcast contents.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of displaying contents, the method comprising:
receiving initial scene configuration information of a content written in a markup language from an external device;
parsing and structuralizing the initial scene configuration information;
rendering the content according to the structuralized initial scene configuration information;
receiving additional scene configuration information of the content from the external device;
updating the structuralized initial scene configuration information based on the received additional scene configuration information; and
rendering the content according to the updated initial scene configuration information.

2. The method of claim 1, wherein the updating of the structuralized initial scene configuration information comprises:
adding an additional configuration corresponding to the received additional scene configuration information to the structuralized initial scene configuration information, replacing a replaceable configuration corresponding to the received additional scene configuration information with some configurations of the structuralized initial scene configuration information, or deleing some configurations of the structuralized initial scene configuration information according to the received additional scene configuration information.

3. The method of claim 1, wherein the markup language is an extensible markup language (XML), and the structuralizing of the initial scene configuration information comprises parsing the initial scene configuration information to constitute a document object model (DOM) tree.

4. The method of claim 3, wherein the updating of the structuralized initial scene configuration information comprises:
adding a tree node corresponding to the received additional scene configuration information to the DOM tree, replacing a replaceable tree node corresponding to the received additional scene configuration information with some nodes of the DOM tree, or deleing some nodes of the DOM tree according to the received additional scene configuration information.

5. A method of synchronizing contents, the method comprising:
receiving a transmission stream through a broadcast network;
parsing the received transmission stream;
when it is determined that a first content comprised in the transmission stream is a multiview content according to the parsing result, receiving a second content corresponding to the first content through a communication network; and
simultaneously outputting the first content comprised in the transmission stream and the received second content.

6. The method of claim 5, wherein the parsing of the transmission stream comprises parsing information comprised in a program map table (PMT) to determine whether to provide the multiview content, wherein the PMT comprises at least one of a frame number, a multiview content presentation time stamp (PTS), a PTS starting value, and a society of motion picture and television engineers (SMPTE) Timecode starting value.

7. The method of claim 5, wherein the receiving of the second content comprises:
receiving a media presentation description (MPD) and an initialization segment; and
receiving a segment of the second content corresponding to a frame number of the first content in which a PTS value of the first content is equal to a PTS value of the multiview content.

8. The method of claim 5, wherein the receiving of the second content comprises:
receiving an MPD and an initialization segment; and
calculating a current frame number of the first content based on a difference between a PTS value of a current frame of the first content and a PTS starting value and receiving a segment of the second content corresponding to the current frame number of the first content.

9. The method of claim 5, wherein the receiving of the second content comprises:
receiving an MPD and an initialization segment; and
calculating time information of the first content based on a difference between an SMPTE Timecode value of the first content and an SMPTE Timecode starting value and receiving a segment of the second content corresponding to the time information of the first content.

10. The method of claim 8, wherein the receiving of the second content comprises:
receiving the second content corresponding to a frame positioned behind the preset number of frames more than the current frame of the first content in consideration of a delay of the communication network.

11. A method of displaying broadcast contents, the method comprising:
transmitting scene configuration information of a first content written in a markup language through a first sever;
transmitting and rendering the first content based on the scene configuration information of the transmitted first content; and
when a second content viewing event occurs, transmitting and rendering a second content through a second server.

12. The method of claim 11, wherein when the second content viewing event occurs, rendering of the first content stops, and when an event for ending the rendering of the second content occurs, the first content is rendered from a time when the rendering of the first content stops.

13. The method of claim 11, wherein when the second content viewing event occurs, the second server synchronizes the second content with the first content, and transmits and renders the synchronized contents.

14. A display device comprising:
a receiver configured to receive initial scene configuration information of a content written in a markup language and the content from an external device;
an output unit configured to output the received content; and
a controller configured to parse and structuralize the initial scene configuration information, and render and output the content according to the structuralized initial scene configuration information,
wherein when the receiver receives additional scene configuration information of the content from the external device, the controller updates the structuralized initial scene configuration information based on the received additional scene configuration information, and renders and outputs the content according to the updated initial scene configuration information.

15. The display device of claim 14, wherein the structuralized initial scene configuration information is updated by adding an additional configuration corresponding to the received additional scene configuration information to the structuralized initial scene configuration information, replacing a replaceable configuration corresponding to the received additional scene configuration information with some configurations of the structuralized initial scene configuration information, or deleting some configurations of the structuralized initial scene configuration information according to the received additional scene configuration information.
